# EUROPEAN PATENT SPECIFICATION

(11) **EP 2 272 702 B1**
(45) Date of publication and mention of the grant of the patent: **25.09.2013**
(21) Application number: 10185033.7
(22) Date of filing: 20.02.2003
(51) Int. Cl.: B60K 6/445, B60K 6/387, B60W 20/00

(54) **Compound power drive system including dynamo-electric units**
Hybridantriebssystem mit dynamo-elektrischen Einheiten
Système de propulsion hybride avec unités dynamo-électriques

(43) Date of publication of application: 12.01.2011
(62) Divisional of application: 03251041.4
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A- 0 806 314
- EP-A- 0 826 544
- EP-A- 1 092 581
- EP-A- 1 216 871
- JP-A- 60 095 238
- US-A- 1 984 830
- US-A1- 2002 033 059

## Description

### BACKGROUND OF THE INVENTION

### (a) Field of the Invention

The present invention is related to a drive dynamo-electric unit controlled compound system comprised of one dynamo-electric unit or a primary and a secondary dynamo-electric unit units or more than two dynamo-electric unit units incorporated with engine or other rotating moment device, and one unit or more than one unit of centrifugal clutch, one-way transmission mechanism or output clutch or related transmission mechanism and manual control interface, central controller and storage device to create specific control pattern and to execute the operation of specific compound power function by selection among those units and control of drive control device operation.

### (b) Description of the Prior Art:

EP 0806314 discloses a hybrid power system including an internal combustion engine having a rotational output shaft that is coupled with an electric machine according to the preamble of claim 1. An output shaft is driven by the internal combustion engine through a centrifugal clutch or by the electrical machine through a one way clutch.

The present invention by incorporating an engine to a primary dynamo-electric unit and a transmission mechanism to create new functions as supplementary to a prior art of incorporating an engine to a single dynamo-electric unit under European Patent No. 0826544 (formerly Application No. 96306388.8) invented by the same inventor of this application.

### SUMMARY OF THE INVENTION

The primary purpose of the present invention is to provide an drive dynamo-electric unit controlled compound system comprised of one dynamo-electric unit or a primary and a secondary dynamo-electric unit units or more than two dynamo-electric unit units incorporated with engine or other rotating moment device, and one unit or more than one unit of centrifugal clutch, one-way transmission mechanism or output clutch or related transmission mechanism and manual control interface, central controller and storage device to create specific control pattern and to execute the operation of specific compound power function by selection among those units and control of drive control device operation.

A speed-controlled dynamo-electric compound system according to the present invention is defined in claim 1.

### BRIEF DESCRIPTION OF THE DRAWINGS

Fig. 1 is a view of a first preferred embodiment of the present invention having an application system with an centrifugal clutch as the drive control;
Fig. 2 is a view of a second preferred embodiment of the present invention having an application system with an centrifugal clutch as the drive control;
Fig. 3 is a view of a third preferred embodiment of the present invention having an application system with an centrifugal clutch as the drive control;
Fig. 4 is a view of a fourth preferred embodiment of the present invention having an application system with an centrifugal clutch as the drive control;
Fig. 5 is a schematic view showing that a first dynamo-electric unit from the fourth preferred embodiment of the present invention is replaced by two independent dynamo-electric unit units respectively provided by the side of two output shafts from the differential gear unit;
Fig. 6 is a view showing that the first preferred embodiment of the present invention is provided with a controllable clutch;
Fig. 7 is a view showing that the first preferred embodiment given in Fig. 6 is provided with an output clutch,
Fig. 8 is a schematic view of a preferred embodiment showing that the primary dynamo-electric unit given in Fig. 7 is further replaced by two independent dynamo-electric unit units respectively provided by the side of two output shafts from the differential gear unit;
Fig. 9 is a view of a first preferred embodiment of the present invention having an centrifugal clutch as the drive control provided opposite to the acting direction;
Fig. 10 is a view of a second preferred embodiment of the present invention having an centrifugal clutch as the drive control provided opposite to the acting direction;
Fig. 11 is a view of a third preferred embodiment of the present invention having an centrifugal clutch as the drive control provided opposite to the acting direction;
Fig. 12 is a view of a fourth preferred embodiment of the present invention having an centrifugal clutch as the drive control provided opposite to the acting direction;
Fig. 13 is a schematic view showing that in the fourth preferred embodiment of the present invention, the primary dynamo-electric unit is replaced by two independent dynamo-electric unit units respectively provided by the side of two output shafts from the differential gear unit;
Fig. 14 is a view showing that the preferred embodiment of the present invention given in Fig. 15 is provided with an output clutch;
Fig. 15 is a view showing that the preferred embodiment of the present invention given in Fig. 14 is provided with an output clutch;
Fig. 16 is a view showing that the primary dynamo-electric unit of the preferred embodiment of the present invention given in Fig. 15 is further replaced by two independent dynamo-electric unit units respectively provided by the side of two output shafts from the differential gear unit;
Fig. 17 is a view showing that the primary dynamo-electric unit and a shaft on load side of first preferred embodiment from Fig. 9 share the same structure;
Fig. 18 is a view showing that an additional secondary dynamo-electric unit is directly coupled to the engine shaft or engaging in mutual transmission with the transmission mechanism;
Fig. 19 is a view showing that the primary dynamo-electric unit in the preferred embodiment taken from Fig. 17 is replaced by two independent dynamo-electric unit units respectively provided by the side of two output shafts from the differential gear unit;
Fig. 20 is a view showing that the primary dynamo-electric unit in the preferred embodiment taken from Fig. 18 is replaced by two independent dynamo-electric unit units respectively provided by the side of two output shafts from the differential gear unit;
Fig. 21 is a view showing that an automatic transmission mechanism provided between the engine and the drive shaft of the present invention;
Fig. 22 is a first preferred embodiment of an application system of the present invention taken from Fig. 1 that has a one-way transmission mechanism connected in series with the driven drawing side of the centrifugal clutch as the drive control;
Fig. 23 is a second preferred embodiment of an application system of the present invention taken from Fig. 2 that has a one-way transmission mechanism connected in series with the driven drawing side of the centrifugal clutch as the drive control;
Fig. 24 is a third preferred embodiment of an application system of the present invention taken from Fig. 3 that has a one-way transmission mechanism connected in series with the driven drawing side of the centrifugal clutch as the drive control;
Fig. 25 is a fourth preferred embodiment of an application system of the present invention taken from Fig. 4 that has a one-way transmission mechanism connected in series with the driven side of the centrifugal clutch as the drive control;
Fig. 26 is a view showing that the primary dynamo-electric unit in the preferred embodiment taken from Fig. 25 is replaced by two independent dynamo-electric unit units respectively provided by the side of two output shafts from the differential gear unit;
Fig. 27 is a view showing that the preferred embodiment of the present invention given in Fig. 22 is provided with a controllable clutch;
Fig. 28 is a view showing that the preferred embodiment of the present invention given in Fig. 27 is provided with an output clutch;
Fig. 29 is a view showing that the primary dynamo-electric unit in the preferred embodiment taken from Fig. 28 is replaced by two independent dynamo-electric unit units respectively provided by the side of two output shafts from the differential gear unit;
Fig. 30 is a view showing a first preferred embodiment of an application system of the preferred embodiment given in Fig. 22 that has the drive control comprised of an centrifugal clutch provided in opposite to the acting direction and a one-way transmission mechanism with a selected direction;
Fig. 31 is a view showing a second preferred embodiment of an application system of the preferred embodiment given in Fig. 23 that has the drive control comprised of an centrifugal clutch provided in opposite to the acting direction and a one-way transmission mechanism with a selected direction;
Fig. 32 is a view showing a third preferred embodiment of an application system of the preferred embodiment given in Fig. 24 that has the drive control comprised of an centrifugal clutch provided in opposite to the acting direction and a one-way transmission mechanism with a selected direction;
Fig. 33 is a view showing a fourth preferred embodiment of an application system of the preferred embodiment given in Fig. 25 that has the drive control comprised of an centrifugal clutch provided in opposite to the acting direction and a one-way transmission mechanism with a selected direction;
Fig. 34 is a view showing that the primary dynamo-electric unit in the preferred embodiment taken from Fig. 33 is replaced by two independent dynamo-electric unit units respectively provided by the side of two output shafts from the differential gear unit;
Fig. 35 is a view showing that the preferred embodiment of the present invention given in Fig. 30 is provided with a controllable clutch;
Fig. 36 is a view showing that the preferred embodiment of the present invention given in Fig. 35 is provided with an output clutch;
Fig. 37 is a view showing that the primary dynamo-electric unit in the preferred embodiment taken from Fig. 36 is replaced by two independent dynamo-electric unit units respectively provided by the side of two output shafts from the differential gear unit;
Fig. 38 is a first preferred embodiment of an application system taken from Fig. 1 changed to that a one-way transmission mechanism provided between a shaft having the engine incorporated to the driven drawing side of the centrifugal clutch and the output shaft incorporated by the drive drawing side of the centrifugal clutch;
Fig. 39 is a second preferred embodiment of an application system taken from Fig. 2 changed to that a one-way transmission mechanism provided between a shaft having the engine incorporated to the driven drawing side of the centrifugal clutch and the output shaft incorporated by the drive drawing side of the centrifugal clutch;
Fig. 40 is a third preferred embodiment of an application system taken from Fig. 3 changed to that a one-way transmission mechanism provided between a shaft having the engine incorporated to the driven drawing side of the centrifugal clutch and the output shaft incorporated by the drive drawing side of the centrifugal clutch;
Fig. 41 is a fourth preferred embodiment of an application system taken from Fig. 4 changed to that a one-way transmission mechanism provided between a shaft having the engine incorporated to the driven drawing side of the centrifugal clutch and the output shaft incorporated by the drive drawing side of the centrifugal clutch;
Fig. 42 is a view showing that the primary dynamo-electric unit in the preferred embodiment taken from Fig. 41 is replaced by two independent dynamo-electric unit units respectively provided by the side of two output shafts from the differential gear unit;
Fig. 43 is a view showing that the preferred embodiment of the present invention given in Fig. 38 is provided with a controllable clutch;
Fig. 44 is a view showing that the preferred embodiment of the present invention given in Fig. 43 is provided with an output clutch;
Fig. 45 is a view showing that the primary dynamo-electric unit in the preferred embodiment taken from Fig. 44 is replaced by two independent dynamo-electric unit units respectively provided by the side of two output shafts from the differential gear unit;
Fig. 46 is a view showing a first preferred embodiment of an application system of the preferred embodiment given in Fig. 38 that has the drive control comprised of an centrifugal clutch provided in opposite to the acting direction and a one-way transmission mechanism with a selected direction;
Fig. 47 is a view showing a second preferred embodiment of an application system of the preferred embodiment given in Fig. 39 that has the drive control comprised of an centrifugal clutch provided in opposite to the acting direction and a one-way transmission mechanism with a selected direction;
Fig. 48 is a view showing a third preferred embodiment of an application system of the preferred embodiment given in Fig. 40 that has the drive control comprised of an centrifugal clutch provided in opposite to the acting direction and a one-way transmission mechanism with a selected direction;
Fig. 49 is a view showing a fourth preferred embodiment of an application system of the preferred embodiment given in Fig. 41 that has the drive control comprised of an centrifugal clutch provided in opposite to the acting direction and a one-way transmission mechanism with a selected direction;
Fig. 50 is a view showing that the primary dynamo-electric unit in the preferred embodiment taken from Fig. 49 is replaced by two independent dynamo-electric unit units respectively provided by the side of two output shafts from the differential gear unit;
Fig. 51 is a view showing that the preferred embodiment of the present invention given in Fig. 46 is provided with a controllable clutch;
Fig. 52 is a view showing that the preferred embodiment of the present invention given in Fig. 51 is provided with an output clutch;
Fig. 53 is a view showing that the primary dynamo-electric unit in the preferred embodiment taken from Fig. 52 is replaced by two independent dynamo-electric unit units respectively provided by the side of two output shafts from the differential gear unit;
Fig. 54 is a view of a first preferred embodiment of an application system of the prevent invention having a one-way transmission mechanism as the drive control provided between the load side shaft and the engine power source;
Fig. 55 is a view of a second preferred embodiment of an application system of the prevent invention having a one-way transmission mechanism as the drive control provided between the load side shaft and the engine power source;

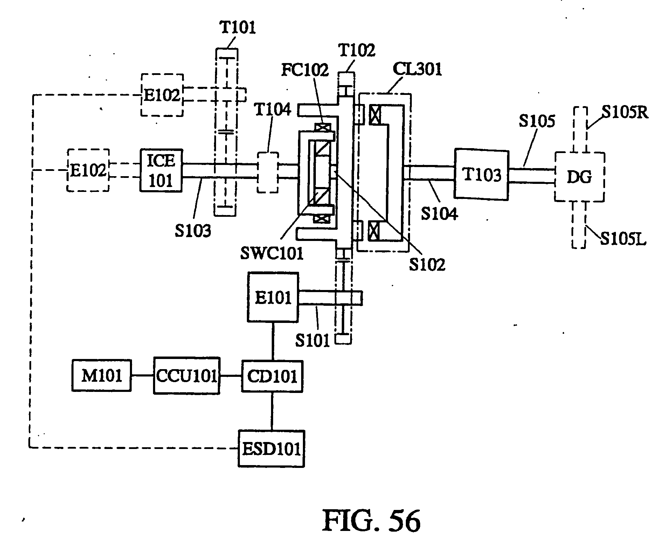

Fig. 56 is a view of a third preferred embodiment of an application system of the prevent invention having a one-way transmission mechanism as the drive control provided between the load side shaft and the engine power source;
Fig. 57 is a view of a fourth preferred embodiment of an application system of the prevent invention having a one-way transmission mechanism as the drive control provided between the load side shaft and the engine power source;
Fig. 58 is a view showing that the primary dynamo-electric unit in the preferred embodiment taken from Fig. 57 is replaced by two independent dynamo-electric unit units respectively provided by the side of two output shafts from the differential gear unit;
Fig. 59 is a view showing that the preferred embodiment of the present invention given in Fig. 54 is provided with a controllable clutch;
Fig. 60 is a view showing that the preferred embodiment of the present invention given in Fig. 59 is provided with an output clutch;
Fig. 61 is a view showing that the primary dynamo-electric unit in the preferred embodiment taken from Fig. 60 is replaced by two independent dynamo-electric unit units respectively provided by the side of two output shafts from the differential gear unit;

### DETAILED DESCRIPTION OF THE PREFERRED EMBODIMENTS

The present invention related to a drive dynamo-electric unit controlled compound system including one dynamo-electric unit or a primary and a secondary dynamo-electric unit units or more than two dynamo-electric unit units incorporated with engine or other rotating moment device, and one unit or more than one unit of centrifugal clutch, one-way transmission mechanism or output clutch or related transmission mechanism and manual control interface, central controller and storage device to create specific control pattern and to execute the operation of specific compound power function by selection among those units and control of drive control device operation, is essentially comprised of the following units:
- centrifugal clutches FC101 and FC102: comprised of one centrifugal clutch unit FC101 or of two centrifugal clutch units of FC101 and FC102 being engaged to each other or sharing a same structure, or of a double-acting centrifugal clutch having two independent centrifugal clutch units coupled to each other by means of a transmission device; the structure includes three layers, an inner layer, an intermediate layer and an outer layer, within, the inner layer contains a drive power-locking unit to act outward when the centrifugal force reaches a preset value and is incorporated to draw each other with an output shaft; the intermediate layer incorporated to an engine has a coupling surface or an inner circumference and a drive power-locking unit on its outer side to act outward when the centrifugal force reaches its preset value so to couple to a power-locking inner circumference from the outer layer to execute the function of an output clutch, and the outer layer also incorporated to the output shaft so to temporarily cut off linkage to a load when the engine runs at low rpm;
- one-way transmission mechanism SWC101: comprised of various known mechanisms that execute one-way transmission to be directly provided or jointly provided with other transmission mechanism between a primary dynamo-electric unit E101 and a shaft S 103 driven by an engine ICE101 for the shaft S103 driven by the engine ICE101 to transmit at a pre-selected rotation direction in relation to the rotation part of the primary dynamo-electric unit E101; on the contrary, to execute idling to interrupt the power transmission. That is, if the engine ICE101 drives clockwise (CW), the shaft S102 transmits power to the primary dynamo-electric unit E101; and counterclockwise (CCW), to interrupt the power transmission. Meanwhile, if the primary dynamo-electric unit E101 drives counterclockwise (CCW), the shaft S102 drives the engine ICE101 in opposite direction; and clockwise (CW), to interrupt the power transmission. With the selection of the direction for the one-way transmission mechanism SWC101, the rotation direction of and whether the transmission to be continued or interrupted between the engine ICE101 and the primary dynamo-electric unit E101 is selected as the case may be;

The one-way transmission mechanism SWC101 is independently provided or provided at the same time with the centrifugal clutch FC101 for the system to indicate various compound power characteristics; as required, the relative locations between the one-way transmission mechanism SWC101 and the centrifugal clutch FC101 has the centrifugal clutch FC101 provided at where close to the side of the shaft S103 of the engine ICE101 and the one-way transmission mechanism provided at where close to the side of the primary dynamo-electric unit E101 or the centrifugal clutch; or has both of the centrifugal clutch FC101 and the one-way transmission mechanism SWC101 provided at where between the shaft S 103 of the engine ICE101 and the rotation part of the primary dynamo-electric unit while both of the centrifugal clutch FC101 and the one-way transmission mechanism SWC101 is separately provided or sharing the same structure;
- primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit;
- secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy;
- engine ICE101: comprised of various known internal combustion engine and its related start-up and operation speed control device and peripheral interface devices including fuel system, air inlet & exhaust system, ignition system and cooling system to directly drive the shaft S103 or by way of fixed speed ratio or variable speed ratio or variable transmission mechanism or planetary transmission mechanism T104;
- the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set,
- fixed or variable speed ratio or variable transmission or planetary transmission mechanisms T101, T102, T103: a structure to executed variable speed ratio or function, comprised of gear set, chain and sprocket gear set, power-locking gear set, planetary gear set, or other stage or variable, manual or automatic shift transmission mechanism; the transmission mechanism is optional;
- output clutches CL101, CL301: an optional mechanism comprised of output clutches connected in series between the shaft S 104 on load side and the load controlled by manual, mechanical, electromagnetic or hydraulic or centrifugal force;
- differential gear set DG: an optional mechanism comprised of gear or power-locking gear to receive rotation kinetic energy inputted by a shaft S 105 for driving two differential shafts S105R and S105L;
- storage discharging device ESD101: comprised of a (dis)chargeable secondary battery or super capacitor;
- central control unit CCU101: comprised of mechanical-electric or solid-state electronic device, or a digital or analog central control circuit comprised of a micro-processor and its related software to be subject operation and setup by a manual control interface M101 to control the operation of the system;
- drive control device CD101: controlled by the manual control interface M101 and the central control unit CCU101 to operate both dynamo-electric units functioning as motors to execute control of startup, stop, speed variation or positive/negative rotation and torque; or as generators to control power generation voltage, amperage, frequency and power performance, charging electric energy inputted to the storage discharging device ESD101 and electric energy outputted from the storage discharging device ESD101; and
- manual control interface M101: related to a digital or analog manual control interface comprised of mechanical-electric or solid-state electronic circuit to control the operation of the system via the central control unit CCU101 by manual operation;

By combining those devices and mechanisms described above, the present invention executes some of or all the following functions:
(1) the primary dynamo-electric unit functioning as a starting motor, draws the activating side of the centrifugal clutch to close it and start the engine;
(2) the secondary dynamo-electric unit functioning as a starting motor, starts the engine;
(3) once the engine starts, the load is driven by controlling the operation of the centrifugal clutch or the manual, mechanical or electromagnetic or hydraulic force controlled power-locking or hydraulic force coupled type clutch;
(4) in addition to driving the load, the running engine continues to draw the secondary dynamo-electric unit to operate as a generator for driving the primary dynamo-electric unit to jointly drive the load or to charge the storage discharging device ESD101;
(5) the engine is running to drive the load while the primary dynamo-electric unit functioning as a motor with electric energy supplied from the storage discharging device ESD101 to jointly drive the load;
(6) during the down time of the primary dynamo-electric unit, the engine runs to drive the secondary dynamo-electric unit to function as a generator so to charge the storage discharging device ESD101 or output electric energy to other loads;
(7) the running engine drives the secondary dynamo-electric unit to generate power for driving the primary dynamo-electric unit to further drive the load or to simultaneously charging the batteries or to output electric energy to other loads;
(8) the primary dynamo-electric unit drives the load at low speed as controlled by the electric energy supplied from the storage discharging device via a drive control device while the engine is not running;
(9) the electric energy drive status including the generation braking either by the primary or the secondary dynamo-electric units or both at the same time, the engine becomes a braking resistance as drawn by the closed centrifugal clutch once the sliding speed exceeds the preset value; or
(10) any related functions provided by other structures as described above.

Additional to providing those functions as described in the preceding subparagraphs (1) through (10), preferred embodiments of the application system with drive control by the centrifugal clutch FC101 essentially operates in the following patterns A1, A2 and A3:
A1: with the system standby and the engine not running, the manual control interface M101 is starts acceleration on the system, the primary dynamo-electric unit E101 is started to execute low speed drive operation to drive the load until the centrifugal clutch FC101 is closed to start the engine as drawn by the centrifugal clutch FC101 for the secondary dynamo-electric unit E102 either engages in generation output or stops generation as required;
   Once the manual control interface M101 is executing acceleration on the throttle of the engine and a centrifugal clutch FC102 is provided for the system, the centrifugal clutch FC 102 is closed to draw the shaft S 104 on the load side thus to drive the load; or the closed centrifugal clutch FC101 is used to draw the shaft S 104 on the load side to further drive the load;
   As the manual control interface M101 increases to accelerate the throttle, the engine rpm is further promoted to increase the power to drive the load, the primary dynamo-electric unit E101 may stop transmitted power or convert to function as a generator, or to input electric energy to operate as a motor to provide parallel pilot kinetic energy for the engine ICE 101.
A2: With the system standby, the engine also is standby at low speed or is driving a peripheral load, e.g. air conditioner or secondary air pump, the secondary dynamo-electric unit E102 executes generation output or stops generation;
   When the manual control interface M101 starts to accelerate the system, the primary dynamo-electric unit E101 is activated to execute drive operation at low speed to drive the load;
   Once the manual control interface M101 performs acceleration drive on the primary dynamo-electric unit E101 by controlling the electric energy supplied from the storage discharging device ESD101 or a generator, the manual control interface M101 synchronously accelerates the throttle on the engine; if the system is provided with a centrifugal clutch FC 102, the engine rpm increases until the centrifugal clutch FC102 is closed to draw the shaft S 104 on the load side, thus to drive load, or the centrifugal clutch FC102 connects the engine in parallel to drive the load when the primary dynamo-electric unit E101 accelerates until the centrifugal clutch FC101 is closed.
   As the manual control interface M101 increases to accelerate the throttle, the engine rpm is further promoted to increase the power to drive the load, the primary dynamo-electric unit E101 may stop transmitted power or convert to function as a generator, or to input electric energy to operate as a motor to provide parallel pilot kinetic energy for the engine ICE 101.
A3: With the system standby, the engine also is standby at constant speed or is driving a peripheral load, e.g. air conditioner or secondary air pump, the secondary dynamo-electric unit E102 executes generation output or stops generation;
   When the manual control interface M101 starts to accelerate the system by controlling the electric energy supplied from the storage discharging device ESD101 or a generator, the manual control interface M101 synchronously accelerates the throttle on the engine; if the system is provided with a centrifugal clutch FC102, the engine rpm increases until the centrifugal clutch FC 102 is closed to draw the shaft S 104 on the load side, thus to drive load, or the centrifugal clutch FC102 connects the engine in parallel to drive the load when the primary dynamo-electric unit E101 accelerates until the centrifugal clutch FC102 is closed.

Based on the basic configuration and the application of its operation, multiple preferred embodiments of a compound power system controlled by a drive dynamo-electric unit speed of the present invention are described as follows:

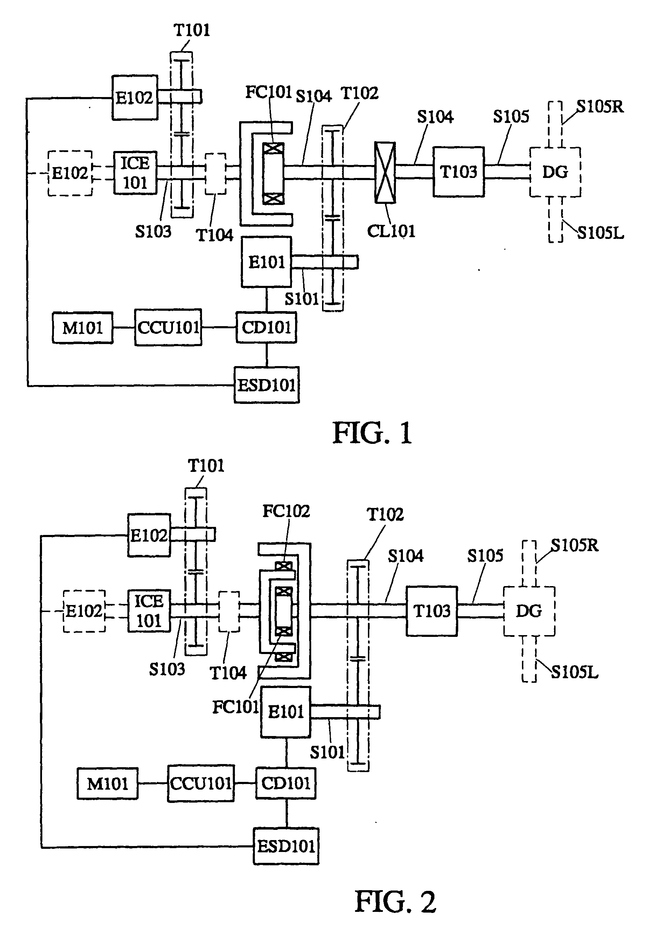

A. Figs. 1 through 8 shows applications of the system by having the centrifugal clutch FC101 as the drive control for the compound power system controlled by a drive dynamo-electric unit speed of the present invention.
   Fig.1 shows a first preferred embodiment of the present invention having a centrifugal clutch as the drive control, essentially comprised of a centrifugal clutch FC101 provided between a shaft S103 driven by an engine ICE101 and another shaft on the load side S104 for controlling both of the shaft S103 and another shaft S 104 on the load side to couple or interrupt transmission. Within, the shaft S103 driven by the engine ICE101 is coupled to the driven draw side of the centrifugal clutch FC101 while another shaft S 104 on the load side is coupled to the drive draw side of the centrifugal clutch FC101 so that once the shaft S 104 on the load side reaches the preset rpm, it drives to close the centrifugal clutch FC101, thus to draw the shaft S103 which is directly driven by the engine ICE101 or through a fixed speed ratio or variable speed ratio, or variable device or planetary transmission mechanism T104. The shaft S 104 on the load side is provided to drive the load, and a fixed speed ratio or variable speed ratio or variable transmission mechanism T102 is provided to the shaft S104 on the load side to engage in mutual transmission with a primary dynamo-electric unit E101;
   - the load side shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L;
   - the engine ICE101: comprised of various known internal combustion engine and its related start-up and operation speed control device and peripheral interface devices including fuel system, air inlet & exhaust system, ignition system and cooling system to directly drive the shaft S103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side shaft S104 and to the drive draw side of the centrifugal clutch FC101 by means of a fixed or variable speed ratio or variable transmission or planetary transmission mechanism T102; and
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the shaft S103 driven by the engine ICE101 and the driven draw side of the centrifugal clutch FC102 by means of a fixed or variable speed ratio or variable transmission or planetary transmission mechanism T101, or the secondary dynamo-electric unit E102 is directly coupled to the shaft S 103 of the engine;

   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.
   Fig. 2 shows a second preferred embodiment of the present invention having an application system with a centrifugal clutch as the drive control, essentially comprised of having connected in series a centrifugal clutch FC101 then another centrifugal clutch FC 102 between the shaft S103 and the drive load side shaft S104 of the engine ICE101. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC 101, the inner layer incorporated to the load side shaft S104 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the shaft S103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the load side shaft S104 so to provide linkage with the load when the engine runs at low rpm or is temporarily cut off. The shaft S 103 either directly driven or driven through a fixed speed ratio or variable speed ratio, or variable steering transmission mechanism or planetary transmission mechanism T104 by the engine is coupled to the driven draw side of the centrifugal clutch FC101 and the load side shaft S104 to the drive draw side of the centrifugal clutch FC101 so to forthwith close the centrifugal clutch FC101 and further to draw the shaft S103 driven by the engine ICE101 when the load side shaft S104 reaches its preset rpm. Alternatively, a fixed speed ratio or variable speed ratio, or variable transmission mechanism or planetary transmission mechanism T102 is provided on the load side shaft S104 to engage mutual transmission with the primary dynamo-electric unit;
   - the load side shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L;
   - the engine ICE101: comprised of various known internal combustion engine and its related start-up and operation speed control device and peripheral interface devices including fuel system, air inlet & exhaust system, ignition system and cooling system to directly drive the shaft S103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side shaft S104 and to the drive draw side of the centrifugal clutch FC101 by means of a fixed or variable speed ratio or variable transmission or planetary transmission mechanism T102; and
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the shaft S103 driven by the engine ICE101 and the driven draw side of the centrifugal clutch FC102 by means of a fixed or variable speed ratio or variable transmission or planetary transmission mechanism T101, or the secondary dynamo-electric unit E102 is directly coupled to the shaft S 103 of the engine;

   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

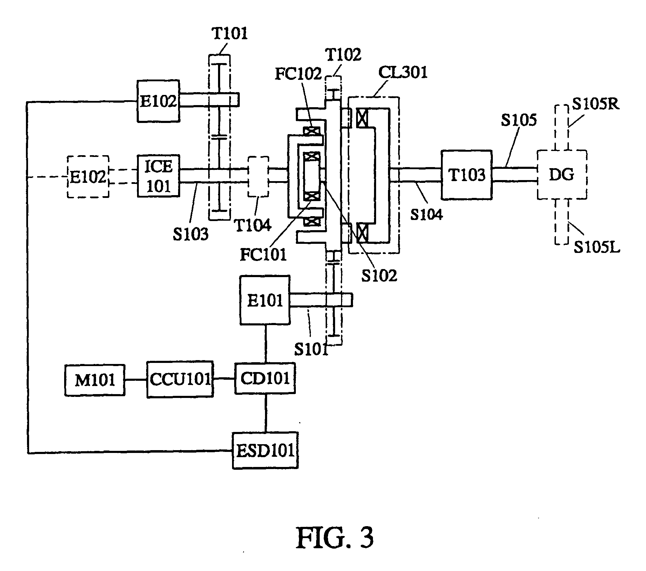

   Fig. 3 shows a third preferred embodiment of the present invention having an application system with a centrifugal clutch as the drive control, essentially comprised of having coupled to an intermediate shaft S102 the fixed speed ratio or variable speed ratio or variable transmission mechanism or planetary transmission mechanism T102, the power-locking coupling surface on the outer circumference of the double-acting centrifugal clutch FC101 and the outer circumference power-locking surface of the double-acting centrifugal clutch FC102 in the preferred embodiment as illustrated in Fig. 2. Those double-acting centrifugal clutches are comprised of two units of centrifugal clutches FC101 and FC102 incorporated to each other forming a three-layer structure containing the inner, the intermediate and the outer layers. Within, the inner layer and the inner side of the intermediate layer form the centrifugal clutch FC101, the inner layer and the inner side of the intermediate layer incorporated to the intermediate shaft S102 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the shaft S103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the intermediate shaft S102 so to provide linkage with the load when the engine runs at low rpm or is temporarily cut off. The shaft S103 either directly driven or driven through a fixed speed ratio or variable speed ratio, or variable transmission mechanism or planetary transmission mechanism T104 by the engine is coupled to the driven draw side of the centrifugal clutch FC101 and the intermediate shaft S102 to the drive draw side of the centrifugal clutch FC101 so to forthwith close the centrifugal clutch FC101 and further to draw the shaft S103 driven by the engine ICE101 when the intermediate shaft S102 reaches its preset rpm.
   - the intermediate shaft S102: is directly outputted to the load, or alternatively, to an output clutch CL301 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L; the additional output clutch CL301is provided between the intermediate shaft S102 and the load side shaft S104 with both shafts driven by the power-locking coupling surfaces on the inner and outer circumferences of the double-acting centrifugal clutches FC101 and FC102;
   - the engine ICE101: comprised of various known internal combustion engine and its related start-up and operation speed control device and peripheral interface devices including fuel system, air inlet & exhaust system, ignition system and cooling system to directly drive the shaft S 103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the intermediate shaft S102, which in turn incorporated to the centrifugal clutch FC101 by means of a fixed or variable speed ratio or variable transmission or planetary transmission mechanism T102; and
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the centrifugal clutch FC101 and the shaft S103 of the engine ICE101 by means of a fixed or variable speed ratio or variable transmission or planetary transmission mechanism T101, or the secondary dynamo-electric unit E102 is directly coupled to the shaft S 103 of the engine;

   The combination of those structures described above for the system subject to control by the manual control interface M101, the central control unit CCU101, the drive control device CD101 and the storage discharging device ESD101 provides the same functions as those by the preferred embodiment illustrated in Fig. 2 when the output clutch CL301 is closed; and additional functions when the output clutch CL301 is disengaged, including those functions related to subparagraphs (1) through (10) or other specific function, and patterns related to those operation patterns described in A 1 through A3 or other specific operation pattern.

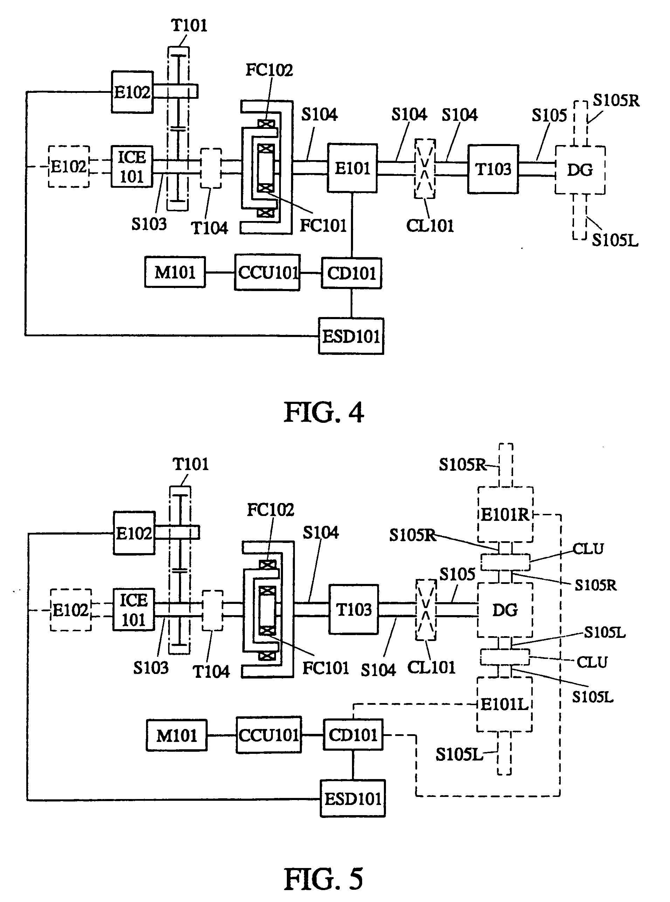

   Fig. 4 shows a fourth preferred embodiment of the present invention having an application system with a centrifugal clutch as the drive control, essentially comprised of having the dynamo-electric unit E101 and the load side shaft S 104 to indicate coaxial structure. A structure of the double-acting centrifugal clutches FC101 and FC102 provided between the dynamo-electric unit E101 and the engine ICE 101 has its inner layer and outer layer incorporated to the load side shaft S104 coupled to the output shaft of the primary dynamo-electric unit E101 and its intermediate layer incorporated to the shaft S103 driven by the engine ICE 101. The double-acting centrifugal clutches are comprised of two centrifugal FC101 and FC102 incorporated to each other forming a three-layer structure containing the inner, the intermediate and the outer layers. Within, the inner layer and the inner side of the intermediate layer form the centrifugal clutch FC101, the inner layer and the inner side of the intermediate layer incorporated to the intermediate shaft S102 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the shaft S103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the load side shaft S 104 so to provide linkage with the load when the engine runs at low rpm or is temporarily cut off. The ICE101 is directly or by means of a shaft S103 driven by a fixed speed ratio or variable speed ratio, or variable transmission mechanism or planetary transmission mechanism T104 and the load side shaft S102 is incorporated to the drive draw side of the centrifugal clutch FC101 so to forthwith close the centrifugal clutch AC101 and further to draw the shaft S 103 driven by the engine ICE101 when the load side shaft S102 reaches its preset rpm;
   - the engine ICE101: comprised of various known internal combustion engine and its related start-up and operation speed control device and peripheral interface devices including fuel system, air inlet & exhaust system, ignition system and cooling system to directly drive the shaft S 103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side shaft S104 and to the drive draw side of the centrifugal clutch FC101 by means of a fixed or variable speed ratio or variable transmission or planetary transmission mechanism T102; and the load side shaft S104 is forthwith outputted to the load, or as required, to execute uniaxial output by a selected fixed speed ratio or variable speed ratio or variable transmission mechanism or planetary transmission mechanism T103 through the shaft S105, or alternatively, a transmission mechanism comprised of a differential gear set DG to execute differential output through two units of differential shafts S105R and S105L;
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the shaft S103 of the engine ICE101 and the centrifugal clutch FC101 by means of a fixed or variable speed ratio or variable transmission or planetary transmission mechanism T101, or the secondary dynamo-electric unit E102 is directly coupled to the shaft S 103 of the engine; and
   - the output clutch CL101: an optional mechanism provided between the output side of the primary dynamo-electric unit E101 and the fixed or variable speed ratio or variable transmission or planetary transmission mechanism T103, the output clutch CL101 is controlled by manual, mechanical, electromagnetic or hydraulic or centrifugal force;

   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Fig. 5 is a schematic view of the preferred embodiment of the present invention taken from Fig. 4 wherein, the primary dynamo-electric unit is replaced with two units of dynamo-electric units respectively provided on the output shaft sides of the differential gear set. The primary dynamo-electric unit E101 in the preferred embodiment illustrated in Fig. 4 is replaced by a primary dynamo-electric unit E101R to the right and another primary dynamo-electric unit E101L on the left. The primary dynamo-electric unit E101R is directly connected in series with a shaft S105R to the right of a differential gear set DG or alternatively adapted with a one-way or two-way clutch CLU before being connected in series to the shaft S105R to the right of the differential gear set DG. The other primary dynamo-electric unit E101L is directly connected in series with a shaft S105L to the left of a differential gear set DG or alternatively adapted with a one-way or two-way clutch CLU before being connected in series to the shaft S105L to the left of the differential gear set DG. The shaft S104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric units E101R and another primary dynamo-electric unit E101L are subject to equal speed or differential drive by the drive control device CD101.

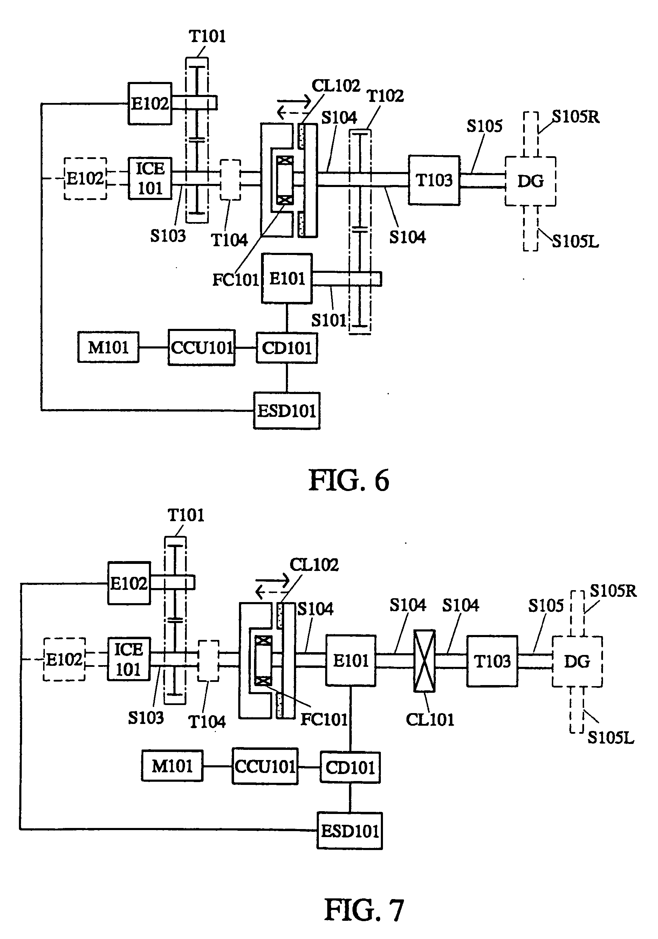

   Fig. 6 is a view showing that the first preferred embodiment of the present invention as illustrated in Fig. 1 is provided with a controllable clutch. Within, the centrifugal clutch FC101 and another clutch CL102 controlled by manual, mechanical, electromagnetic, hydraulic power-locking type of or hydraulic coupling type are provided between the engine shaft S 103 and the load side shaft S104 so to execute power coupling or interruption on both of the engine shaft S103 and the load side shaft S104 for the system to be equipped with a power-locking type or hydraulic coupling type controllable clutch CL102 and engine throttle, to further acquire another specific function for the engine rotation power driven load. The shaft S103 either directly driven by the engine ICE 101, or through a fixed or variable speed ratio or variable transmission or planetary transmission mechanism T104 is coupled to the driven drawn side of the centrifugal clutch FC101 while the load side shaft S104 to the drive draw side of the centrifugal clutch FC101. That is, once the load-side shaft S104 reaches the preset rpm, the centrifugal clutch FC101 is forthwith closed to draw the shaft S 103 driven by the engine ECE101. The centrifugal clutch FC101 and the controllable clutch CL102 is individually provided or sharing the same structure. The preferred embodiment provided with the controllable clutch is essentially comprised of:
   - the engine ICE101: comprised of various known internal combustion engine and its related start-up and operation speed control device and peripheral interface devices including fuel system, air inlet & exhaust system, ignition system and cooling system to directly drive the shaft S 103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the shaft S101 of the primary dynamo-electric unit E101 is coupled to the load side shaft S104 of the centrifugal clutch FC101 by means of a fixed or variable speed ratio or variable transmission or planetary transmission mechanism T102; and
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the shaft S103 of the engine ICE101 and the centrifugal clutch FC101 by means of a fixed or variable speed ratio or variable transmission or planetary transmission mechanism T101, or the secondary dynamo-electric unit E102 is directly coupled to the shaft S 103 of the engine;

   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Fig. 7 is a view showing that the preferred embodiment given in Fig. 6 is provided with an output clutch. That is, an output clutch CL101 controlled by manual, mechanical, electromagnetic, and hydraulic or centrifugal force is provided to the preferred embodiment illustrated in Fig. 6. The output clutch CL101 is provided between the load side shaft S104 driven by the primary dynamo-electric unit E101 and the load. When the output clutch CL101 is closed, it provides the same function as those by the preferred embodiment illustrated in Fig. 6; and additional functions when the output clutch CL101 is disengaged, including being separated from the load to leave the engine to simultaneously drive the first and the second dynamo-electric units E101 and E102 to function as generators, or to drive the primary dynamo-electric E101 alone to operate as a generator while the primary dynamo-electric unit E101 is provided between the output clutch CL101 and the controllable clutch CL102; as well as those functions related to subparagraphs (1) through (10) or other specific function, and patterns related to those operation patterns described in A1 through A3 or other specific operation pattern.

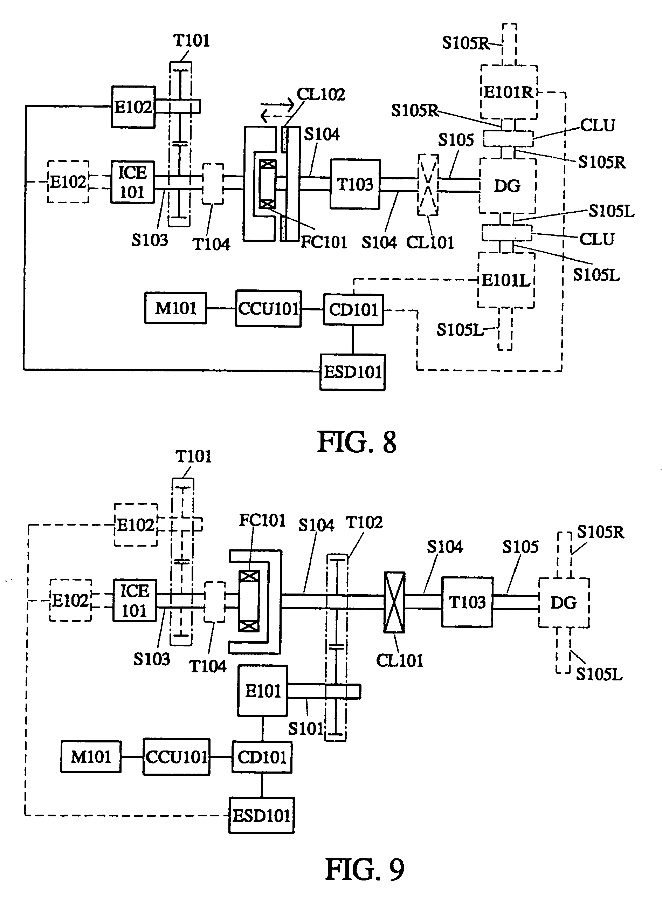

   Fig. 8 is a schematic view showing that the preferred embodiment illustrated in Fig. 7 is further having the primary dynamo-electric unit replaced by two independent dynamo-electric units respectively provided on the side of two output shafts of a differential gear set. Within, the primary dynamo-electric unit E101 of the preferred embodiment in Fig. 7 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD 101 to provide the same functions as those by the preferred embodiment given in Fig. 7.
B. Figs. 9 through 21 show that each of those preferred embodiments illustrated in Figs. 1 through 8 has those centrifugal clutches disposed between the shaft S 103 driven by the engine ICE101 and the load side shaft S104 are provided in opposite direction to become drive controlled application systems:
   Fig. 9 shows a first preferred embodiment of a drive controlled application system by centrifugal clutch of the present invention, essentially comprised of having provided the centrifugal clutch FC101 between the shaft S103 driven by the engine ICE101 and the load side shaft S104 to control the operation of coupling or interruption the transmission by both of the shafts S103 and S104. Within, the shaft S103 driven by the engine ICE101 is coupled to the drive draw side of the centrifugal clutch FC101 and the load side shaft S104 is coupled to the driven draw side of the centrifugal clutch FC101 so that once the shaft S 103 which is directly driven by the engine ICE101 or through a fixed speed ratio or variable speed ratio, or variable device or planetary transmission mechanism T104 reaches the preset rpm, it drives to close the centrifugal clutch FC101, thus to draw the load side shaft S104. The shaft S104 on the load side is provided to drive the load, and a fixed speed ratio or variable speed ratio or variable transmission mechanism T102 is provided to the shaft S104 on the load side to engage in mutual transmission with a primary dynamo-electric unit E101;
   - the load side shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L;
   - the engine ICE101: comprised of various known internal combustion engine and its related start-up and operation speed control device and peripheral interface devices including fuel system, air inlet & exhaust system, ignition system and cooling system to directly drive the shaft S103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side shaft S104 and to the drive draw side of the centrifugal clutch FC101 by means of a fixed or variable speed ratio or variable transmission or planetary transmission mechanism T102; and
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the shaft S103 driven by the engine ICE101 and the driven draw side of the centrifugal clutch FC102 by means of a fixed or variable speed ratio or variable transmission or planetary transmission mechanism T101, or the secondary dynamo-electric unit E102 is directly coupled to the shaft S103 of the engine;

   The combination of those structures described above for the system are subject to control by the manual control interface M101, the central control unit CCU101, the drive control device CD 101 and the storage discharging device ESD101. The specific system structure described above provides functions related to those described in subparagraphs (1) through (10) or other specific function, it also provides patterns related to those operation patterns described in A1 through A3 or other specific operation pattern.

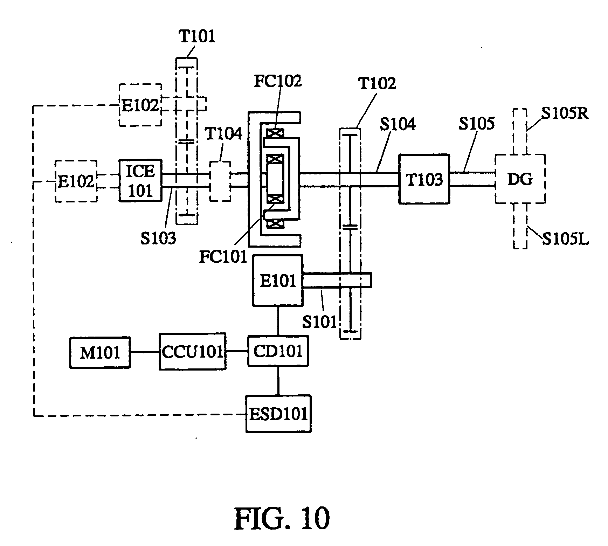

   Fig. 10 shows a second preferred embodiment of the present invention having an application system with a centrifugal clutch provided in the opposite direction as the drive control, essentially comprised of having connected in series a centrifugal clutch FC101 then another centrifugal clutch FC 102 between the shaft S 103 and the drive load side shaft S 104 of the engine ICE101. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the load side shaft S103 of the engine ICE101 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the load side shaft S104 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the shaft S103 on the side of the engine ICE101 so to provide linkage with the load when the engine runs at low rpm or is temporarily cut off. The shaft S103 either directly driven or driven through a fixed speed ratio or variable speed ratio, or variable transmission mechanism or planetary transmission mechanism T104 by the engine is coupled to the drive draw side of the centrifugal clutch FC101 and the load side shaft S104 to the driven draw side of the centrifugal clutch FC101 so to forthwith close the centrifugal clutch FC101 and further to draw the shaft S103 driven by the engine ICE101 when the shaft S103 on the side of the engine ICE101 reaches its preset rpm. Alternatively, a fixed speed ratio or variable speed ratio, or variable transmission mechanism or planetary transmission mechanism T102 is provided on the load side shaft S104 to engage mutual transmission with the primary dynamo-electric unit;
   - the load side shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L;
   - the engine ICE101: comprised of various known internal combustion engine and its related start-up and operation speed control device and peripheral interface devices including fuel system, air inlet & exhaust system, ignition system and cooling system to directly drive the shaft S 103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to the load side shaft S 104, the driven draw side of the centrifugal clutch FC101 and the drive draw side of the other centrifugal clutch FC102 by means of a fixed or variable speed ratio or variable transmission or planetary transmission mechanism T102; and
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the shaft S103 driven by the engine ICE101, the drive draw side of the centrifugal clutch FC101 and the driven draw side of the other centrifugal clutch FC102 by means of a fixed or variable speed ratio or variable transmission or planetary transmission mechanism T101, or the secondary dynamo-electric unit E102 is directly coupled to the shaft S103 of the engine;

   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A 1 through A3 or other specific operation pattern.

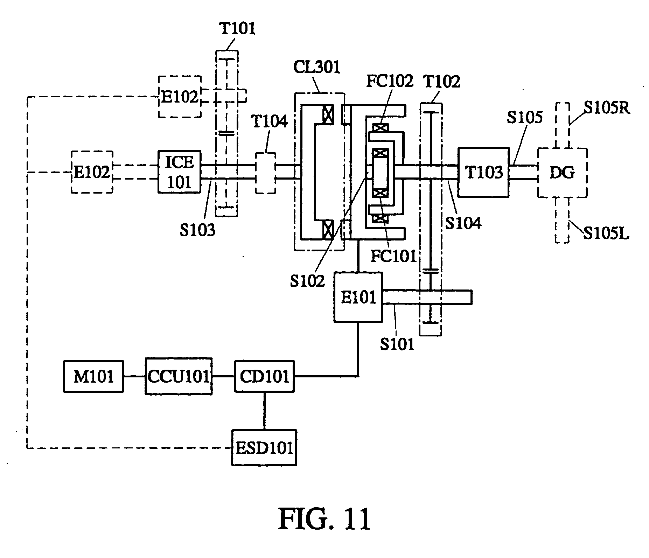

   Fig. 11 shows a third preferred embodiment of the present invention having an application system with a centrifugal clutch provided in the opposite direction as the drive control, essentially comprised of having alternatively provided an output clutch CL301 controlled by manual, mechanical, electromagnetic or hydraulic force between the shaft S103 on the side of the engine ICE101 from the preferred embodiment illustrated in Fig. 10 and where between the drive draw side of the double-acting centrifugal clutch FC101 and the driven draw side of the other centrifugal clutch FC102, and subject to the control by the manual control interface M101, the central control unit CCU101, the drive control device CD101 and the storage discharging device ESD101 to provide the same functions as those by the preferred embodiment from Fig. 10 when the output clutch CL301 is closed; and when the output clutch CL301 is disengaged, to provide additional functions, those functions related to subparagraphs (1) through (10) or other specific function, and patterns related to those operation patterns described in A1 through A3 or other specific operation pattern.

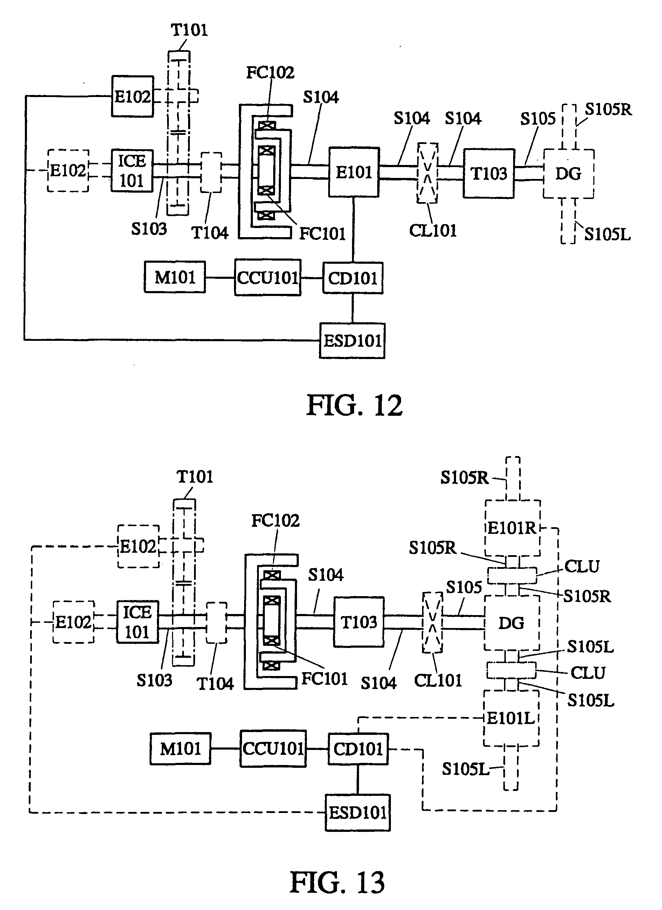

   Fig. 12 shows a fourth of an application system of the present invention having provided a centrifugal clutch in the opposite direction as the drive control, essentially having the dynamo-electric unit E101 and the load side shaft S 104 to indicate coaxial structure while the double-acting centrifugal clutches FC101 and FC102 are provided between the dynamo-electric unit E101 and the engine ICE101, within, its intermediate structure is provided to be incorporated to the load side shaft S104 in the same structure of the output shaft of the primary dynamo-electric unit E101, and its inner and outer layers incorporated to the engine shaft S103. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the engine shaft S 103 drawn to each other is provided with a drive power-locking unit to act outward when the centrifugal force reaches a preset value; the outer side of the intermediate layer and the inner side of the outer layer form the centrifugal clutch FC 102; the intermediate layer being coupled to the shaft S 103 driven by the primary dynamo-electric unit E101 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer. The drive draw side of the centrifugal clutch FC101 is incorporated to the shaft S103 on the side of the engine ICE101 so to couple to the engine to drive the load when the engine runs at high rpm, and to cut off the linkage to the load when the engine runs at low rpm. The engine ICE101 is either directly or by means of the shaft S103 driven by a fixed speed ratio or variable speed ratio, or variable transmission mechanism or planetary transmission mechanism T104, coupled to the drive draw side of the centrifugal clutch FC101 and the driven draw side of the other centrifugal clutch FC102. Meanwhile, the load side shaft S104 is coupled to the driven draw side of the centrifugal clutch FC101 and the drive draw side of the other centrifugal clutch FC102 so that when the load side shaft S104 reaches its preset rpm, the other centrifugal clutch FC102 is closed thus to draw the shaft S103 driven by the engine ICE101, or when the shaft S103 on the side of the engine ICE101 reaches its preset rpm, the centrifugal clutch FC101 is closed, thus to draw the load side shaft S104 to drive the load;
   - the engine ICE101: comprised of various known internal combustion engine and its related start-up and operation speed control device and peripheral interface devices including fuel system, air inlet & exhaust system, ignition system and cooling system to directly drive the shaft S 103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set;
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is coupled to load side shaft S104 of the centrifugal clutch FC101 by means of a fixed or variable speed ratio or variable transmission or planetary transmission mechanism T102; the load side shaft S104 is forthwith outputted to the load, or alternatively, execute uniaxial output through the shaft S105 by means of a fixed speed ratio, variable speed ratio or variable transmission mechanism or planetary transmission mechanism T103, or to execute differential output through two units of differential shafts S105R and S105L by means of a transmission mechanism comprised of the differential gear set DG;
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the centrifugal clutch FC101 and the shaft S103 of the engine ICE101 by means of a fixed or variable speed ratio or variable transmission or planetary transmission mechanism T101, or the secondary dynamo-electric unit E102 is directly coupled to the shaft S 103 of the engine; and
   - the output clutch CL101: an optional mechanism provided between the output side of the primary dynamo-electric unit E101 and the fixed or variable speed ratio or variable transmission or planetary transmission mechanism T103, the output clutch CL101 is controlled by manual, mechanical, electromagnetic or hydraulic or centrifugal force;

   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A 1 through A3 or other specific operation pattern.
   Fig. 13 is a schematic view showing that the primary dynamo-electric unit in the preferred embodiment of the present invention illustrated in Fig. 12 is replaced by two independent dynamo-electric units respectively provided on two output shafts of the differential gear set; essentially by having the primary dynamo-electric unit E101 in the preferred embodiment illustrated in Fig. 12 to be substituted by two independent primary dynamo-electric units E101R and E101L respectively to the right and left. The primary dynamo-electric unit E101R to the right is directly connected or alternatively through a one-way or two-way clutch CLU in series to the shaft S105R to the right of the differential gear set DG; and the primary dynamo-electric unit E101L on the left is directly connected or alternatively through a one-way or two-way clutch CLU in series to the shaft S105L to the left of the differential gear set DG. The shaft S 104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric units E101R and another primary dynamo-electric unit E101L are subject to equal speed or differential drive by the drive control device CD101.

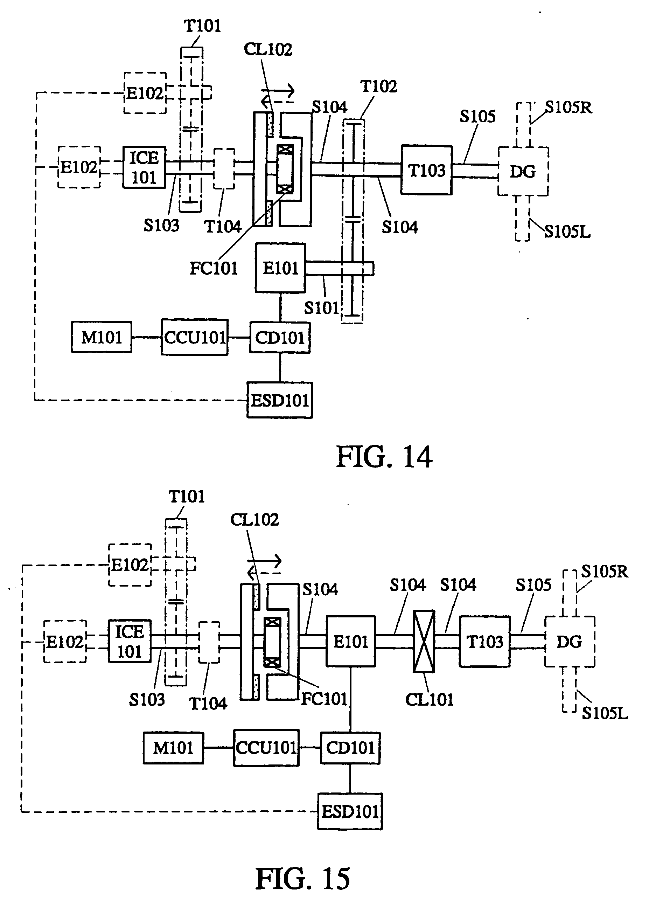

   Fig. 14 shows that the preferred embodiment given in Fig. 9 is further provided with a controllable clutch by having provided a centrifugal clutch FC101 and a controllable CL 102 controlled by manual, mechanical, electromagnetic, hydraulic power-locking type of or hydraulic coupling type to be provided between the engine shaft S103 and the load side shaft S 104 so to execute power coupling or interruption on both of the engine shaft S103 and the load side shaft S 104 for the system to be equipped with a power-locking type or hydraulic coupling type controllable clutch CL102 and engine throttle, to further acquire another specific function for the engine rotation power driven load. The shaft S103 either directly driven by the engine ICE101, or through a fixed or variable speed ratio or variable transmission or planetary transmission mechanism T104 is coupled to the driven drawn side of the centrifugal clutch FC101 while the load side shaft S 104 to the drive draw side of the centrifugal clutch FC101. That is, once the shaft S103 on the side of the engine ICE101 reaches its preset rpm, the centrifugal clutch FC101 is forthwith closed to draw the load side shaft S104. The centrifugal clutch FC101 and the controllable clutch CL102 is individually provided or sharing the same structure; and other units comprising the system are the same as those provided in the preferred embodiment illustrated in Fig. 1.
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Fig. 15 is a view showing that the preferred embodiment given in Fig. 14 is provided with an output clutch. That is, an output clutch CL101 controlled by manual, mechanical, electromagnetic, and hydraulic or centrifugal force is provided to the preferred embodiment illustrated in Fig. 14. The output clutch CL101 is provided between the load side shaft S104 driven by the primary dynamo-electric unit E101 and the load. When the output clutch CL101 is closed, it provides the same function as those by the preferred embodiment illustrated in Fig. 14; and additional functions when the output clutch CL101 is disengaged, including being separated from the load to leave the engine to simultaneously drive the first and the second dynamo-electric units E101 and E102 to function as generators, or to drive the primary dynamo-electric E101 alone to operate as a generator while the primary dynamo-electric unit E101 is provided between the output clutch CL101 and the controllable clutch CL102; as well as those functions related to subparagraphs (1) through (10) or other specific function, and patterns related to those operation patterns described in A1 through A3 or other specific operation pattern.

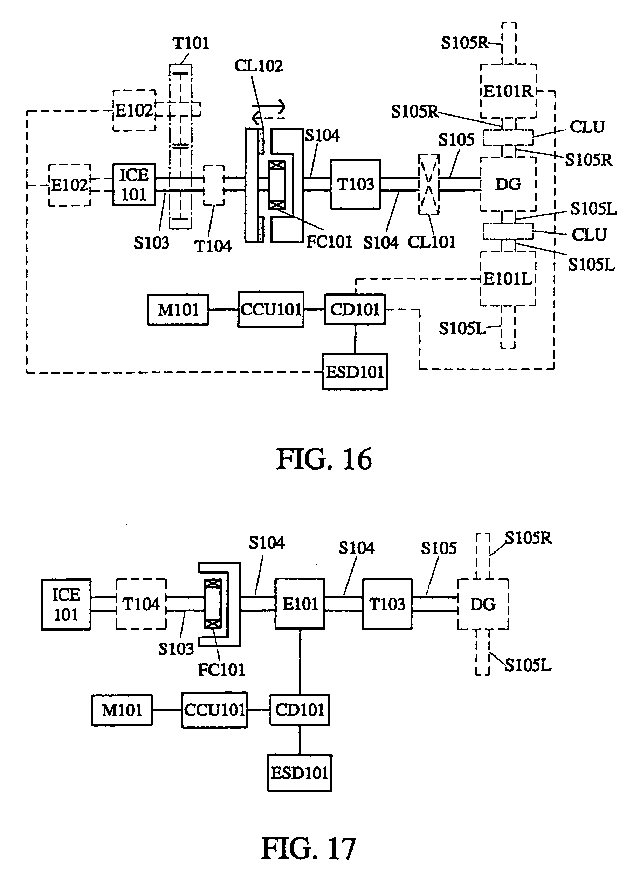

   Fig. 16 is a schematic view showing that the preferred embodiment illustrated in Fig. 15 is further having the primary dynamo-electric unit replaced by two independent dynamo-electric units respectively provided on the side of two output shafts of a differential gear set. Within, the primary dynamo-electric unit E101 of the preferred embodiment in Fig. 15 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S l O5L to the left of a differential gear set DG or alternatively adapted with a one-way or two-way clutch CLU before being connected in series to the shaft S105L to the left of the differential gear set DG. The shaft S 104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S 105 of the differential gear set DG. Both of the primary dynamo-electric unit E101R to the right and the other primary dynamo-electric unit E101L on the left are subject to equal speed or differential drive by a drive control device CD 101 to provide the same functions as those by the preferred embodiment given in Fig. 15.
   Fig. 17 shows that the primary dynamo-electric unit and the load side shaft illustrated in Fig. 9 share the same structure. Within, the preferred embodiment illustrated in Fig. 9 is further to have the primary dynamo-electric unit E101 and the load side shaft S104 to be provided in the same structure, essentially comprised of having provided the centrifugal clutch FC101 between the shaft S103 and the load side shaft S104 of the engine ICE101 to control the operation of coupling or interruption the transmission by both of the shafts S103 and S 104. Within, the shaft S 103 driven by the engine ICE101 is coupled to the drive draw side of the centrifugal clutch FC101 and the load side shaft S104 is coupled to the driven draw side of the centrifugal clutch FC101 so that once the shaft S103 which is directly driven by the engine ICE101 or through a fixed speed ratio or variable speed ratio, or variable device or planetary transmission mechanism T104 reaches the preset rpm, it drives to close the centrifugal clutch FC101, thus to draw the load side shaft S104. The shaft S 104 on the load side is provided to drive the load, and shares the coaxial structure with the primary dynamo-electric unit E101;
   - the load side shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L;
   - the engine ICE101: comprised of various known internal combustion engine and its related start-up and operation speed control device and peripheral interface devices including fuel system, air inlet & exhaust system, ignition system and cooling system to directly drive the shaft S 103 or by way of fixed speed ratio or variable speed ratio or variable transmission mechanism or planetary transmission mechanism T104;
   - the fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set; and
   - the primary dynamo-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 shares the coaxial structure with the load side shaft S104 and is coupled to the driven draw side of the centrifugal clutch FC101;

   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.

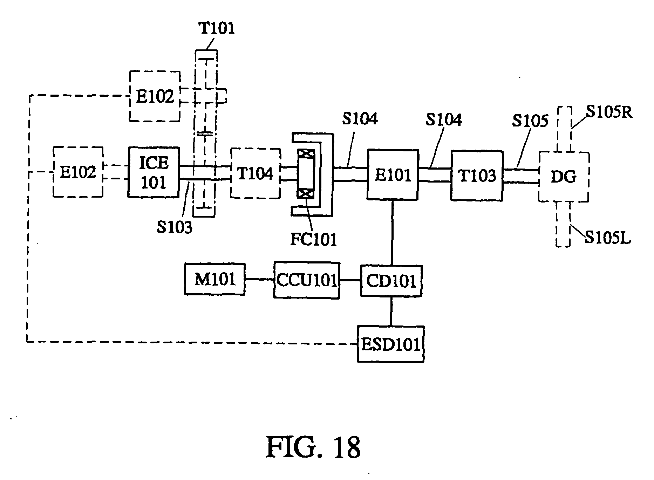

   Fig. 18 shows that the preferred embodiment taken from Fig. 17 is provided with a secondary dynamo-electric unit directly coupled to the engine shaft or engaging in mutual transmission with the engine shaft by means of a transmission mechanism. As illustrated in Fig. 17, the preferred embodiment when required is provided with the secondary dynamo-electric unit E102 which is directly coupled to the shaft S103 of the engine ICE101 or engaging in mutual transmission with the shaft S103 of the engine ICE101 by means of a variable or planetary transmission mechanism T101 with fixed or variable speed ratio so to function at the same time as a generator and as a motor; within,
   - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E 102 is coupled to the centrifugal clutch FC101 and the shaft S103 driven by the engine ICE101 and to the drive draw side of the centrifugal clutch FC101 by means of a fixed or variable speed ratio or variable transmission or planetary transmission mechanism T101, or the secondary dynamo-electric unit E102 is directly coupled to the shaft S103 of the engine;

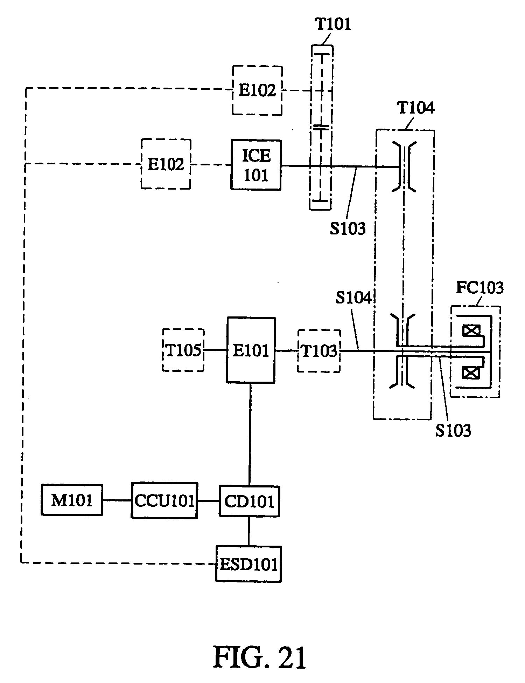

   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Figs. 17 and 18 show that the primary dynamo-electric unit E101 is further replaced by two independent units of the primary dynamo-electric unit E101R to the right and another primary dynamo-electric unit E101L on the left. Within, the primary dynamo-electric unit E101R to the right is directly connected in series with the shaft S105R to the right of the differential gear set DG, or alternatively, adapted with a one-way or two-way clutch CLU before being connected in series to the shaft S105R to the right of the differential gear set DG while the primary dynamo-electric unit E101L on the left is directly connected in series with the shaft S105L to the left of the differential gear set DG, or alternatively, adapted with a one-way or two-way clutch CLU before being connected in series to the shaft S105L to the left of the differential gear set DG. The load side shaft S104 of the centrifugal clutch FC101 is directly or through the fixed ratio or variable speed ratio or variable transmission mechanism or planetary transmission mechanism T103 outputted to the shaft S105 of the differential gear set DG, or alternatively, outputted to the output clutch CL101 before being outputted to the shaft S105 of the differential gear set DG. Meanwhile, both of the primary dynamo-electric units E101R and E101L respectively to the right and the left are subject to drive at equal speed or differential drive by the drive control device CD101.

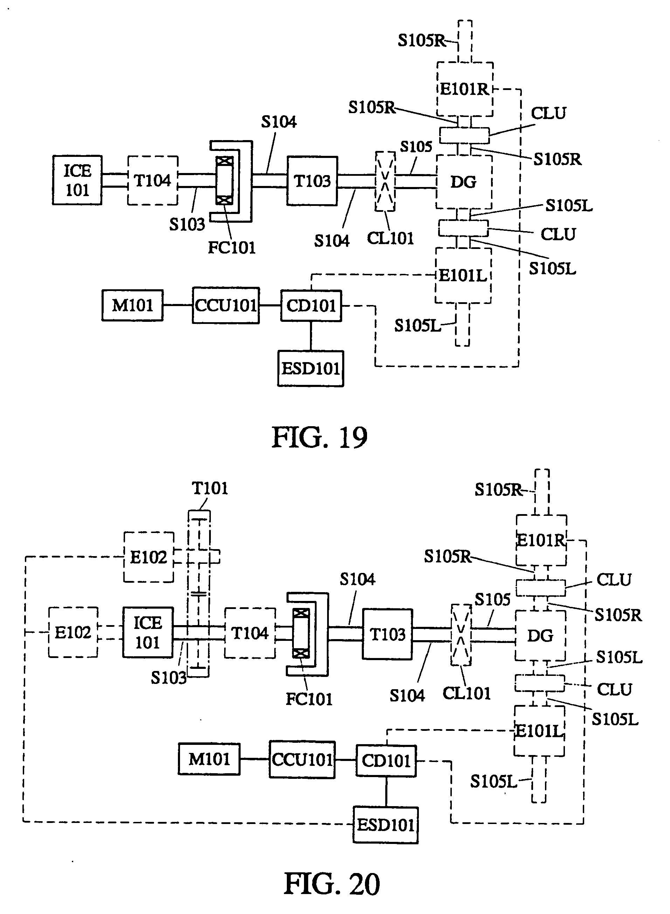

   Fig. 19 shows that the preferred embodiment taken from Fig. 17 is further having its primary dynamo-electric unit to be replaced by two independent dynamo-electric units respectively provided on the side of two output shafts of the differential gear set.
   Fig. 20 shows that the preferred embodiment taken from Fig. 18 is further having its primary dynamo-electric unit to be replaced by two independent dynamo-electric units respectively provided on the side of two output shafts of the differential gear set.
   Furthermore, as required, an automatic transmission mechanism T1040 is provided between the engine ICE101 and the drive shaft S 103 to copy with demands on performance or structural space. Fig. 21 shows a preferred embodiment of having an automatic transmission mechanism provided between the engine and the drive shaft of the present invention, essentially comprised of:
   - the automatic transmission mechanism T1040 comprised of automatic transmission belt gear set (CTV) or other known automatic transmission device is provided between the engine ICE101 and the shaft S103. A centrifugal clutch FC 103 is provided between the shaft S103 and the load side shaft S 104 to control the operation of transmission coupling or transmission interruption of both the shaft S103 and the load side shaft S104. Within, the shaft S103 driven by the engine ICE101 is provided to drive the automatic transmission mechanism T1040 before being coupled to the drive draw side of the centrifugal clutch FC103 by the structure of the output terminal of the automatic transmission mechanism T1040 while the load side shaft S104 is coupled to the driven draw side of the centrifugal clutch FC103 so that the centrifugal clutch FC103 is forthwith closed to draw the load side shaft S104 once the structure of the output terminal of the automatic transmission mechanism reaches its preset rpm;
   - the load side shaft S104: configurations of the output structure comprised by the load side shaft S104 and the primary dynamo-electric unit E101 include:
      1. A directly coaxial structure is indicated between the load side shaft S104 and the primary dynamo-electric unit E101 for the coaxial structure of the load side shaft S104 to directly drive the load; or
      2. Alternatively, a fixed speed ratio or variable speed ratio or variable transmission mechanism or planetary transmission mechanism T103 is provided between the load side shaft S104 and the primary dynamo-electric unit E101 for the output terminal of the primary dynamo-electric unit E101 to directly drive the load; or
      3. A fixed speed ratio or variable speed ratio or variable transmission mechanism or planetary or differential transmission mechanism T105 is further provided between the output terminal of the primary dynamo-electric unit E101 and the load as described in subparagraph 1, then the output terminal is selected as required to drive the load; or
      4. a fixed speed ratio or variable speed ratio or variable transmission mechanism or planetary transmission mechanism T103 is provided between the coaxial structure of the load side shaft S104 and the primary dynamo-electric unit E101 and the driven load, then as required the fixed speed ratio or variable speed ratio or variable transmission mechanism or planetary or differential transmission mechanism T105 is provided, and the output terminal is selected as required to drive the load; within:
         - the engine ICE 101: comprised of various known internal combustion engine and its related start-up and operation speed control device and peripheral interface devices including fuel system, air inlet & exhaust system, ignition system and cooling system to directly drive the shaft S103 or by way of fixed speed ratio or variable speed ratio or variable transmission mechanism or planetary transmission mechanism T104;
         - the automatic transmission mechanism T1040: an optional mechanism comprised of various known coaxial or non-coaxial transmission, e.g. a gear set, belt gear set, sprocket gear set, power-locking gear set or hydraulic coupling device, or automatic transmission mechanism, stage or stageless variable, comprised of electromagnetic coupling device;
         - the primary dynano-electric unit E101: essentially functioning as a motor and also as a secondary generator, related to a secondary motor of series excitation or pilot compound type secondary dynamo-electric unit with dynamo-electric unit characteristics that the speed becomes higher when the load gets smaller; or an AC or DC brush or brushless device that executes amperage control (including control of constant current) for the input electric energy to generate kinetic energy of rotation mechanical that increases torque as the load increases, or to other AC or DC, brush or brushless, synchronous or asynchronous inner rotor or outer rotor rotation dynamo-electric unit; the primary dynamo-electric unit E101 is directly coupled to the driven draw side of the centrifugal clutch FC101, or alternatively, by means of a fixed or variable speed ratio or variable transmission or planetary transmission mechanism T103, coupled to the load side shaft S104 driven by the driven draw side of the centrifugal clutch FC101. The primary dynamo-electric unit E101 directly drives the load, or alternatively, a transmission mechanism of fixed speed ratio or variable speed ratio or variable , or a fixed speed, variable speed ratio, variable , planetary, or differential transmission mechanism T105 is provided to drive the load; and
         - the secondary dynamo-electric unit E102: essentially functioning as a generator and also as a secondary motor, comprised of an inner rotor or outer rotor rotation dynamo-electric unit generates AC or DC, brush or brushless, synchronous or asynchronous energy to convert kinetic energy of rotation mechanical into electric energy; the secondary dynamo-electric unit E102 is coupled to the centrifugal clutch FC101 and the shaft S103 driven by the engine ICE101 and to the drive draw side of the centrifugal clutch FC101 by means of a fixed or variable speed ratio or variable transmission or planetary transmission mechanism T101, or the secondary dynamo-electric unit E102 is directly coupled to the shaft S103 of the engine;

   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

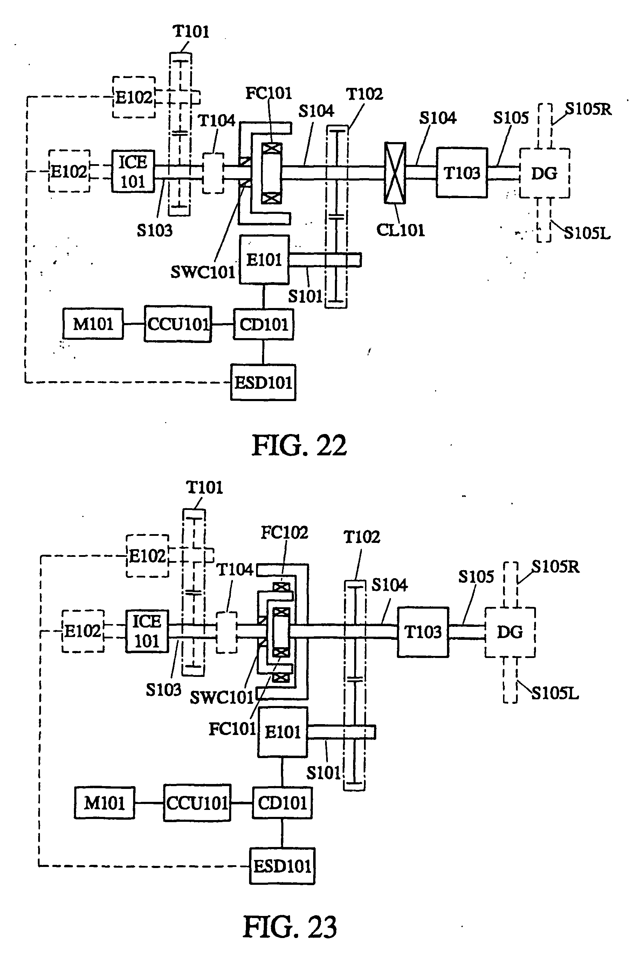

C. Figs. 22 through 29 respectively show an application system having a one-way transmission mechanism SWC101 as a drive control connected in series with the driven draw side of the centrifugal clutch FC101 taken from preferred embodiment of Figs. 1 through 8.
   Fig. 22 is a view showing a first preferred embodiment of the application system taken from Fig. 1 that has a one-way transmission mechanism SWC101 as a drive control connected in series with the driven draw side of the centrifugal clutch FC101, essentially comprised of having provided the centrifugal clutch FC101 between the shaft S103 driven by the engine ICE101 and the load side transmission shaft S104 for controlling the operation of the shaft S103 and the load side shaft S104 to couple or interrupt transmission, and a one-way transmission mechanism SWC101 selected for operation. Within, the shaft S103 driven by the engine ICE101 is coupled to the driven draw side of the centrifugal clutch FC101 through the one-way transmission mechanism SWC101 selected for operation while the load side shaft S104 is coupled to the drive draw side of the centrifugal clutch FC101 so that when the load side shaft S104 reaches its preset rpm, the centrifugal clutch FC101 is forthwith closed, thus to draw the shaft S103 directly driven by the engine ICE101 or through the fixed speed ratio or variable speed ratio or variable transmission mechanism or planetary transmission mechanism T104. The load side shaft S104 to drive the load is provided with another fixed speed ratio or variable speed ratio or variable transmission mechanism or planetary transmission mechanism T102 to engage in mutual transmission with the first primary dynamo-electric unit E101 while other units comprising the system are the same as those provided in the preferred embodiment illustrated in Fig 1;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Fig. 23 is a view showing a second preferred embodiment of an application system, within, one-way transmission mechanism as the driven control is connected in series with the driven draw side of the centrifugal clutch of the preferred embodiment taken from Fig. 2, essentially comprised of double-acting centrifugal clutches FC101 and FC102 and the one-way transmission mechanism SWC 101 selected for operation connected in sequence between the shaft S103 and the drive load side shaft S104 of the engine ICE101. The double-acting centrifugal clutches is comprised of two units of centrifugal clutches FC101 and FC102 in a three-layer structure, an inner, an intermediate and an out layers, either by insertion to each other or integrated. Within, the inner layer and the inner side of the intermediate layer form the centrifugal clutch FC101. The inner layer incorporated to the load side shaft S104 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for operation is coupled to the shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the load side shaft S 104 so to provide linkage with the load when the engine runs at low rpm or is temporarily cut off. The shaft S103 either directly driven or driven through a fixed speed ratio or variable speed ratio, or variable transmission mechanism or planetary transmission mechanism T104 by the engine is coupled to the driven draw side of the centrifugal clutch FC101 and the load side shaft S 104 to the drive draw side of the centrifugal clutch FC101 so to forthwith close the centrifugal clutch FC101 and further to draw the shaft S103 driven by the engine ICE101 when the load side shaft S104 reaches its preset rpm. Alternatively, a fixed speed ratio or variable speed ratio, or variable transmission mechanism or planetary transmission mechanism T102 is provided on the load side shaft S104 to engage mutual transmission with the primary dynamo-electric unit while other units comprising the system are the same as those provided in the preferred embodiment illustrated in Fig. 2.
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

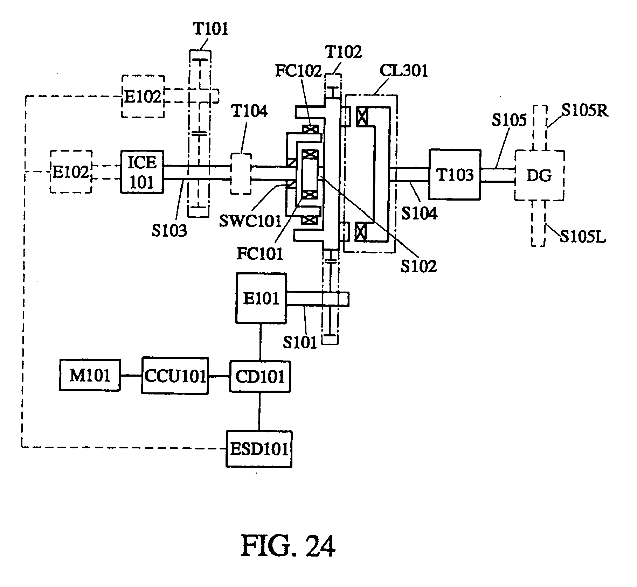

   Fig. 24 is a view showing a third preferred embodiment of an application system that has a one-way transmission mechanism as the driven control connected in series with the driven draw side of the centrifugal clutch of the preferred embodiment taken from Fig. 3. Within, the fixed speed ratio or variable speed ratio, or variable transmission mechanism or planetary transmission mechanism T102, the inner circumference of coupling surface for power-locking of the double-acting centrifugal clutch FC101 and the outer circumference of coupling surface for power-locking of the double-acting centrifugal clutch FC102 are jointly incorporated to an intermediate shaft S 102. The double-acting centrifugal clutches are comprised of two units of centrifugal clutches FC101 and FC 102 inserted to each other in a three-layer structure, an inner, an intermediate and an out layers. Within, the inner layer and the inner side of the intermediate layer form the centrifugal clutch FC101. The inner layer incorporated to the intermediate shaft S102 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for operation is coupled to the shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the intermediate shaft S104 so to provide linkage with the load when the engine runs at low rpm or is temporarily cut off. The shaft S103 either directly driven or driven through a fixed speed ratio or variable speed ratio, or variable transmission mechanism or planetary transmission mechanism T104 by the engine is coupled to the driven draw side of the centrifugal clutch FC101 and the intermediate shaft S102 to the drive draw side of the centrifugal clutch FC101 so to forthwith close the centrifugal clutch FC101 and further to draw the shaft S103 driven by the engine ICE101 when the intermediate shaft S102 reaches its preset rpm.
   - the intermediate shaft S 102: is directly outputted to the load, or alternatively, to an output clutch CL301 controlled by manual, mechanical, electromagnetic, hydraulic or centrifugal force before being outputted to the load via the load side shaft S104; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L; the additional output clutch CL301 is provided between the intermediate shaft S102 and the load side shaft S104 with both shafts driven by the power-locking coupling surfaces on the inner and outer circumferences of the double-acting centrifugal clutches FC101 and FC102 while the other units comprising the system are the same as those provided in the preferred embodiment illustrated in Fig. 3.

   The combination of those structures described above for the system are subject to control by the manual control interface M101, the central control unit CCU101, the drive control device CD101 and the storage discharging device ESD101. The specific system structure described above provides functions same as those by the preferred embodiment illustrated in Fig. 23 when the output clutch CL301 is closed; and provides additional function when the output clutch CL301 is disengaged, including functions related to those described in subparagraphs (1) through (10) or other specific function, and operation patterns related to those operation patterns described in A 1 through A3 or other specific operation pattern.

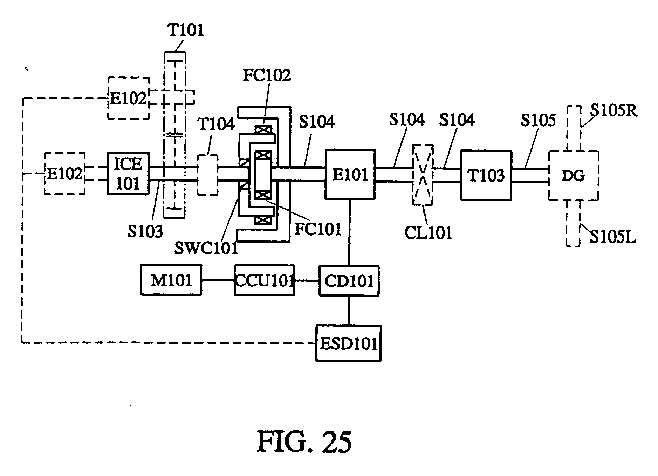

   Fig. 25 is a view showing a fourth preferred embodiment of an application system that has a one-way transmission mechanism as the driven control connected in series with the driven draw side of the centrifugal clutch of the preferred embodiment taken from Fig. 4. Within, the primary dynamo-electric unit E101 and the load side shaft S104 indicate a coaxial structure, and where between the dynamo-electric unit E101 and the engine ICE101 are provided with the double-acting centrifugal clutches FC101 and FC102, and the one-way transmission mechanism SWC101 selected for operation. Both of the inner and the outer structures of the double-acting centrifugal clutches FC101 and FC102 are incorporated to the load side shaft S104 coupled to the output shaft of the primary dynamo-electric unit E101 and its intermediate layer structure is mutually incorporated to the shaft S 103 driven by the engine ICE101. The double-acting centrifugal clutches is comprised of two units of centrifugal clutches FC101 and FC102 inserted to each other in a three-layer structure, an inner, an intermediate and an out layers. Within, the inner layer and the inner side of the intermediate layer form the centrifugal clutch FC101. The inner layer incorporated to the load side shaft S104 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for operation is coupled to the shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the load side shaft S103 so to provide linkage with the load when the engine runs at low rpm or is temporarily cut off. The shaft S103 either directly driven or driven through a fixed speed ratio or variable speed ratio, or variable transmission mechanism or planetary transmission mechanism T104 by the engine is coupled to the driven draw side of the centrifugal clutch FC101 and the load side shaft S103 to the drive draw side of the centrifugal clutch FC101 so to forthwith close the centrifugal clutch FC101 and further to draw the shaft S103 driven by the engine ICE101 when the load side shaft S102 reaches its preset rpm. The output clutch CL101 when required is provided between the output side of the primary dynamo-electric unit E101 and the fixed speed ratio or variable speed ratio, or variable transmission mechanism or planetary transmission mechanism T103. The output clutch CL101 is controlled by manual, mechanical, electromagnetic, hydraulic or centrifugal force while the other units comprising the system are the same as those provided in the preferred embodiment illustrated in Fig. 4.
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

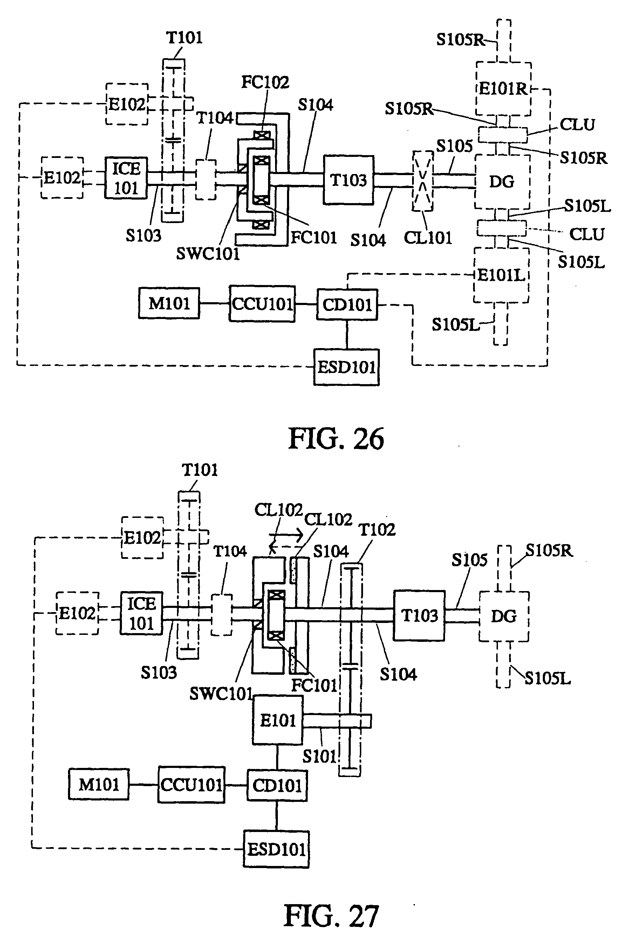

   Fig. 26 is a schematic view showing the primary dynamo-electric unit in the preferred embodiment illustrated in Fig. 25 is replaced by two independent dynamo-electric units respectively provided on the side of two output shafts of a differential gear set. Within, the primary dynamo-electric unit E101 of the preferred embodiment in Fig. 25 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S 104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD101.
   Fig. 27 is a view showing that the preferred embodiment of the present invention illustrated in Fig. 22 is provided with a controllable clutch. Within, the centrifugal clutch FC101 and a clutch CL102 controlled by manual, mechanical, electromagnetic, hydraulic power-locking type of or hydraulic coupling type are provided between the engine shaft S103 and the load side shaft S104 so to execute power coupling or interruption on both of the engine shaft S103 and the load side shaft S104 for the system to be equipped with a power-locking type or hydraulic coupling type controllable clutch CL102 and engine throttle, to further acquire another specific function for the engine rotation power driven load. The shaft S103 either directly driven by the engine ICE101, or through a fixed or variable speed ratio or variable transmission or planetary transmission mechanism T104 is coupled to the driven drawn side of the centrifugal clutch FC101 while the load side shaft S104 to the drive draw side of the centrifugal clutch FC101. That is, once the load-side shaft S104 reaches the preset rpm, the centrifugal clutch FC101 is forthwith closed to draw the shaft S103 driven by the engine ECE101. The centrifugal clutch FC101 and the controllable clutch CL102 is individually provided or sharing the same structure.
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

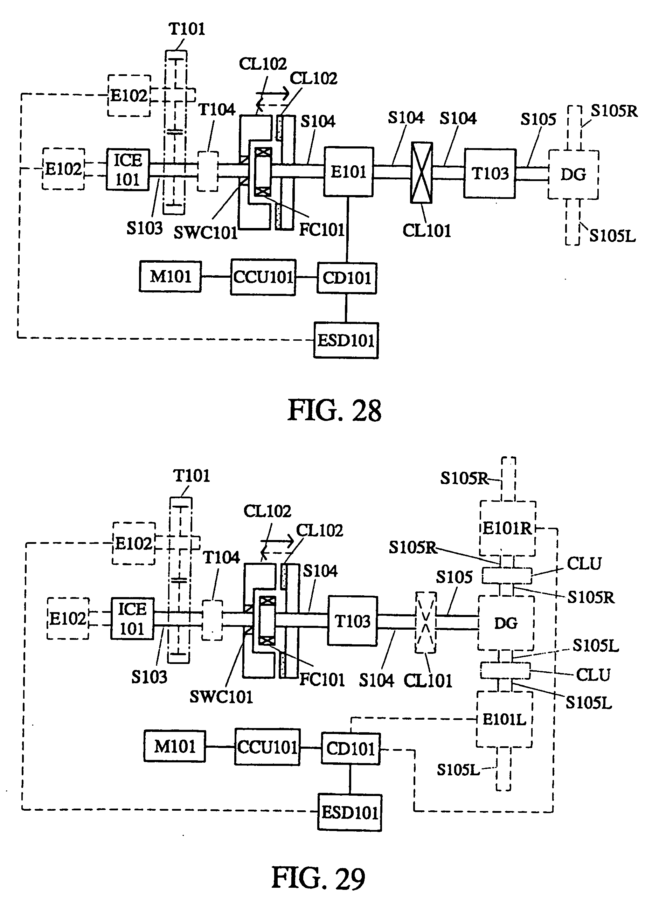

   Fig. 28 shows the preferred embodiment illustrated in Fig. 27 is provided with an output clutch. Within the preferred embodiment illustrated in Fig. 27 is provided with an output clutch CL101 controlled by manual, mechanical, electromagnetic, hydraulic or centrifugal force. The output clutch CL101 is provided between the load side shaft S104 driven by the primary dynamo-electric unit E101 and the load. When the output clutch CL101 is closed, it provides the same function as those by the preferred embodiment illustrated in Fig. 27 and additional functions when the output clutch CL101 is disengaged, including being separated from the load to leave the engine to simultaneously drive the first and the second dynamo-electric units E101 and E102 to function as generators, or to drive the primary dynamo-electric E101 alone to operate as a generator, as well as those functions related to subparagraphs (1) through (10) or other specific function, and patterns related to those operation patterns described in A1 through A3 or other specific operation pattern.
   Fig. 29 is a schematic view showing that the preferred embodiment given in Fig. 28 has the primary dynamo-electric unit to be replaced by two independent dynamo-electric units respectively provided on the side of two output shafts of the differential gear set. The primary dynamo-electric unit E101 of the preferred embodiment in Fig. 28 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S 105 of the differential gear set DG. Both of the primary dynamo-electric unit E101R to the right and the other primary dynamo-electric unit E101L on the left are subject to equal speed or differential drive by a drive control device CD101 to provide the same functions as those by the preferred embodiment given in Fig. 28.

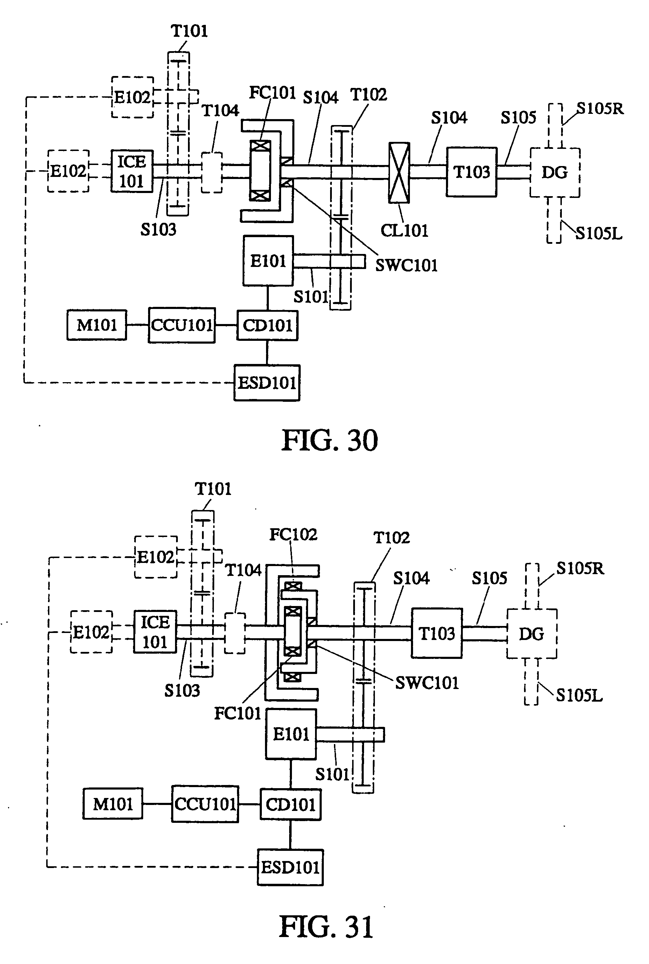

D. In Figs. 30 through 37, those centrifugal clutches disposed between the shafts S103 driven by the engine ICE101 and the load side shaft S104 of the preferred embodiments given in Figs. 9 through 16 are provided in opposite direction to function as the drive application systems.
   Fig. 30 shows that a first preferred embodiment of a drive application system the present invention is comprised of having the centrifugal clutch from the preferred embodiment of Fig. 22 to be provided in opposite direction and a one-way transmission mechanism selected for operation. Wherein, the centrifugal clutch FC101 is provided between the shaft S103 driven by the engine ICE101 and the load side shaft S104 to control the operation of coupling or interruption the transmission by both of the shafts S103 and S104. The shaft S103 driven by the engine ICE101 is coupled to the drive draw side of the centrifugal clutch FC101 and the load side shaft S104 is coupled to the driven draw side of the centrifugal clutch FC101 so that once the shaft S103 which is directly driven by the engine ICE101 or through a fixed speed ratio or variable speed ratio, or variable device or planetary transmission mechanism T104 reaches the preset rpm, it drives to close the centrifugal clutch FC101, thus to draw the load side shaft S104. The shaft S104 on the load side is provided to drive the load, and a fixed speed ratio or variable speed ratio or variable transmission mechanism T102 is provided to the shaft S104 on the load side to engage in mutual transmission with a primary dynamo-electric unit E101 while the other units comprising the system are the same as those provided in the preferred embodiment illustrated in Fig. 9;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Fig. 31 shows that a second preferred embodiment of a drive application system the present invention is comprised of having the centrifugal clutch from the preferred embodiment of Fig. 23 to be provided in opposite direction and a one-way transmission mechanism selected for operation. Wherein, the double-acting centrifugal clutches FC101 and FC102 are connected in series between the shaft S103 and the drive load side shaft S104 of the engine ICE 101. The double acting centrifugal clutches FC101 and FC102 form to each other by insertion or are integrated into a 3-layer structure containing an inner layer, an intermediate layer and an outer layer. The inner layer and the inner side of the intermediate layer form the centrifugal clutch FC101, the inner layer incorporated to the shaft S103 on the side of the engine ICE101 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the load side shaft S103 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the shaft S103 on the side of the engine ICE101 so to provide linkage with the load when the engine runs at low rpm or is temporarily cut off. The load side shaft S 103 either directly driven or driven through a fixed speed ratio or variable speed ratio, or variable transmission mechanism or planetary transmission mechanism T104 by the engine is coupled through the one-way transmission mechanism SWC101 selected for operation to the drive draw side of the centrifugal clutch FC101 and the load side shaft S104 to the driven draw side of the centrifugal clutch FC101 so to forthwith close the centrifugal clutch FC101 and further to draw the load side shaft S104 when the load side shaft S104 reaches its preset rpm. Alternatively, a fixed speed ratio or variable speed ratio, or variable transmission mechanism or planetary transmission mechanism T102 is provided on the load side shaft S104 to engage mutual transmission with the primary dynamo-electric unit; while the other units comprising the system are the same as those provided in the preferred embodiment illustrated in Fig. 10;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern;

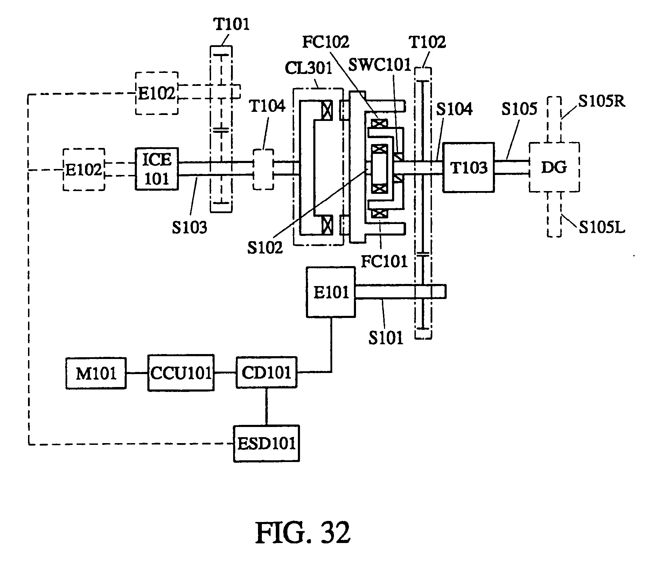

   Fig. 32 shows that a third preferred embodiment of a drive application system the present invention is comprised of having the centrifugal clutch from the preferred embodiment of Fig. 24 to be provided in opposite direction and a one-way transmission mechanism selected for operation. Wherein, an output clutch CL301 controlled by manual, mechanical, electromagnetic or hydraulic force is alternatively provided between the shaft S103 on the side of the engine ICE101 and the double-acting centrifugal clutches at where between the drive draw side of the centrifugal clutch FC101 and the driven draw side of the centrifugal clutch FC102 while the other units comprising the system are the same as those provided in the preferred embodiment illustrated in Fig. 11;
   The combination of those structures described above for the system are subject to control by the manual control interface M101, the central control unit CCU101, the drive control device CD101 and the storage discharging device ESD101. The specific system structure described above provides same functions same as those by the preferred embodiment illustrated in Fig. 31 when the output clutch CL301 is closed; and when the output clutch CL301 is disengaged, the specific system structure described above provides additional functions related to those described in subparagraphs (1) through (10) or other specific function, it also provides patterns related to those operation patterns described in A1 through A3 or other specific operation pattern.

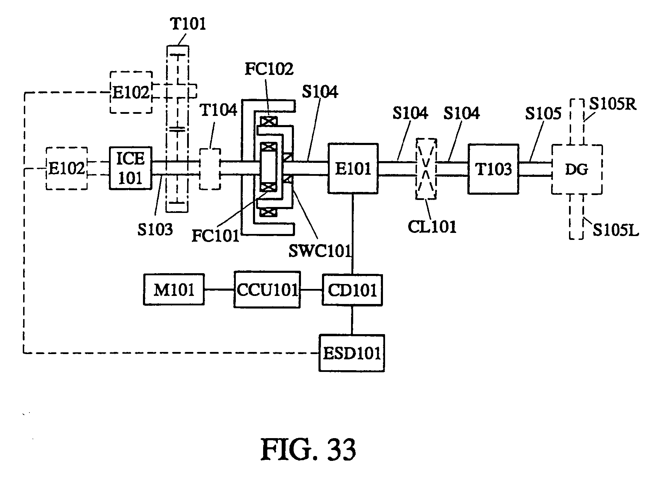

   Fig. 33 shows that a fourth preferred embodiment of a drive application system the present invention is comprised of having the centrifugal clutch from the preferred embodiment of Fig. 25 to be provided in opposite direction and a one-way transmission mechanism selected for operation. Wherein, the dynamo-electric unit E101 and the load side shaft S104 indicate a coaxial structure with the double-acting centrifugal clutches FC101 and FC102 provided between the dynamo-electric unit E101 and the engine ICE101. The intermediate structure is provided to be incorporated to the load side shaft S 104 in the same structure of the output shaft of the primary dynamo-electric unit E101, and its inner and outer layers incorporated to the engine shaft S103. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the engine shaft S103 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the shaft S103 driven by the primary dynamo-electric unit E101 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer. The drive draw side of the centrifugal clutch FC101 is incorporated to the shaft S103 on the side of the engine ICE 101 so to couple to the engine to drive the load when the engine runs at high rpm, and to cut off the linkage to the load when the engine runs at low rpm. The engine ICE101 is either directly or by means of the shaft S 103 driven by a fixed speed ratio or variable speed ratio, or variable transmission mechanism or planetary transmission mechanism T104, coupled to the drive draw side of the centrifugal clutch FC101 and the driven draw side of the other centrifugal clutch FC102. Meanwhile, the load side shaft S 104 is coupled to the driven draw side of the centrifugal clutch FC101 and the drive draw side of the other centrifugal clutch FC102 so that when the load side shaft S 104 reaches its preset rpm, the other centrifugal clutch FC102 is closed thus to draw the shaft S103 driven by the engine ICE 101, or when the shaft S103 on the side of the engine ICE101 reaches its preset rpm, the centrifugal clutch FC101 is closed, thus to draw the load side shaft S104 to drive the load; as required, the output clutch CL101 is provided at where between the output side of the primary dynamo-electric unit E101 and the fixed speed, or variable speed ratio or variable transmission mechanism or planetary transmission mechanism T103. The output clutch CL101 is controlled by manual, mechanical, electromagnetic, hydraulic or centrifugal force while the other units comprising the system are the same as those provided in the preferred embodiment illustrated in Fig. 12;
   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.

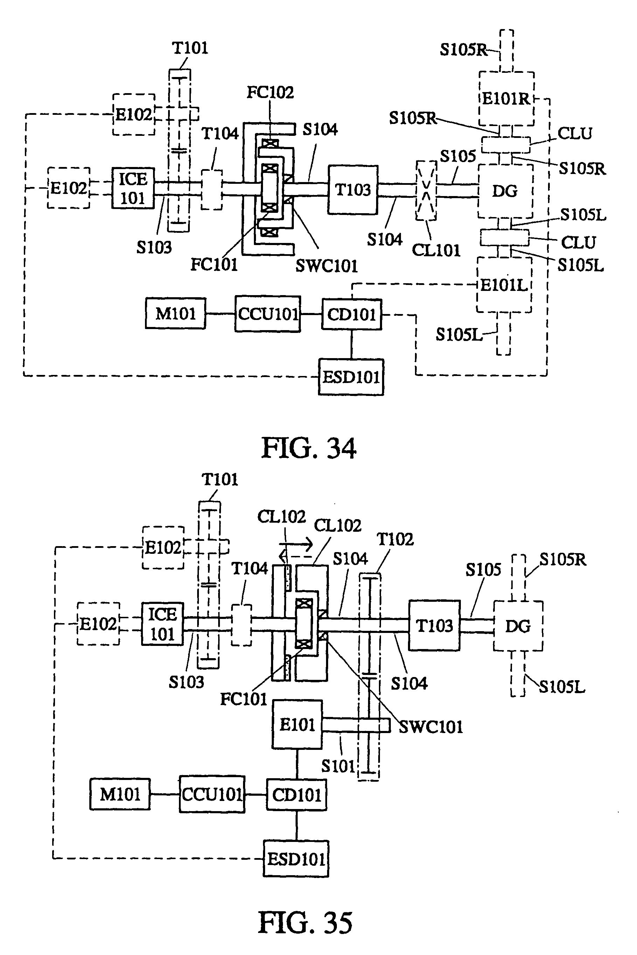

   Fig. 34 is a schematic view showing that the primary dynamo-electric unit in the preferred embodiment taken from Fig. 33 is replaced by two independent dynamo-electric units respectively provided on the side of two output shafts of the differential gear set. Within, the primary dynamo-electric unit E101 of the preferred embodiment in Fig. 33 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD101.
   Fig. 35 shows that the preferred embodiment of Fig. 30 is provided with a controllable clutch. Wherein, a centrifugal the centrifugal clutch FC101 and another clutch CL102 controlled by manual, mechanical, electromagnetic, hydraulic power-locking type of or hydraulic coupling type are provided between the engine shaft S103 and the load side shaft S104 so to execute power coupling or interruption on both of the engine shaft S103 and the load side shaft S104 for the system to be equipped with a power-locking type or hydraulic coupling type controllable clutch CL102 and engine throttle, to further acquire another specific function for the engine rotation power driven load. The shaft S103 either directly driven by the engine ICE101, or through a fixed or variable speed ratio or variable transmission or planetary transmission mechanism T104 is coupled to the drive drawn side of the centrifugal clutch FC101 while the load side shaft S 104 to the driven draw side of the centrifugal clutch FC101. That is, once the shaft S103 on the side of the engine ICE101 reaches the preset rpm, the centrifugal clutch FC101 is forthwith closed to draw the load side shaft S104. The centrifugal clutch FC101 and the controllable clutch CL102 is individually provided or sharing the same structure, while the other units comprising the system are the same as those provided in the preferred embodiment illustrated in Fig. 30.
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

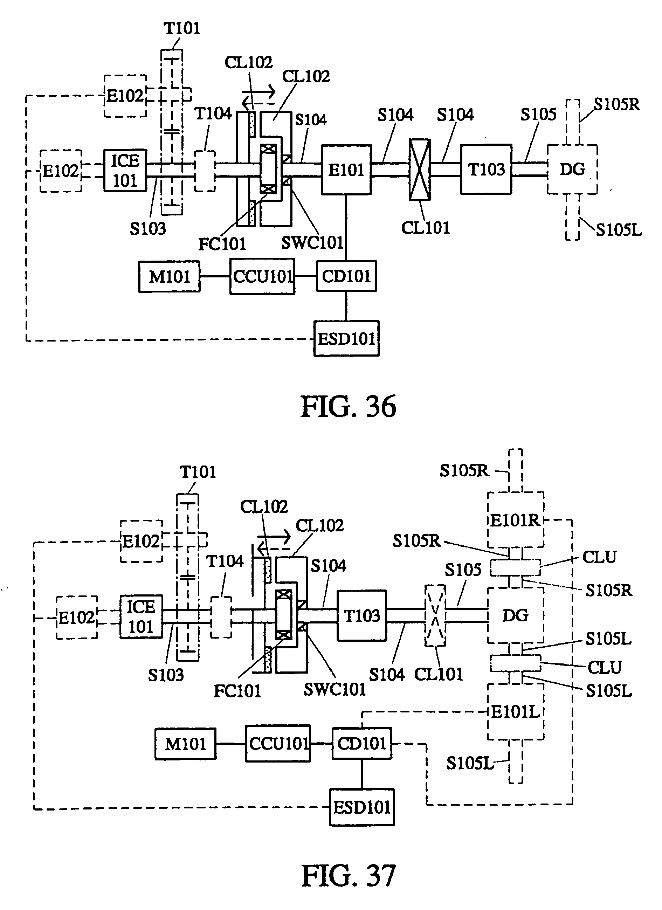

   Fig. 36 shows that the preferred embodiment of Fig. 35 is provided with an output clutch. Wherein, the preferred embodiment taken from Fig. 35 being further provided with an output clutch CL101 controlled by manual, mechanical, electromagnetic, hydraulic or centrifugal force is disposed at where between the load side S104 driven by the primary dynamo-electric unit E101 and the load. When the output shaft CL101 is closed, it provides the same functions as those by the preferred embodiment given in Fig. 35; and when it is disengaged, the engine ICE101 simultaneously drives the primary dynamo-electric unit E101 and the secondary dynamo-electric unit E 102 to operate as a generator or the primary dynamo-electric unit E101 is driven alone to operate as a generator and also provides additional functions related to those described in subparagraphs (1) through (10) or other specific function, it also provides patterns related to those operation patterns described in A1 through A3 or other specific operation pattern.
   Fig. 37 is a schematic view showing that the primary dynamo-electric unit in the preferred embodiment taken from Fig. 36 is replaced by two independent dynamo-electric units respectively provided on the side of two output shafts of the differential gear set. Within, the primary dynamo-electric unit E101 of the preferred embodiment in Fig. 36 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S104 on the load side of the centrifugal clutch FC101 is directly outputted to the shaft S 105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S 105 of the differential gear set DG. Both of the primary dynamo-electric unit E101R to the right and the other primary dynamo-electric unit E101L on the left are subject to equal speed or differential drive by a drive control device CD101, while providing the same functions as those provided in the preferred embodiment illustrated in Fig. 36.

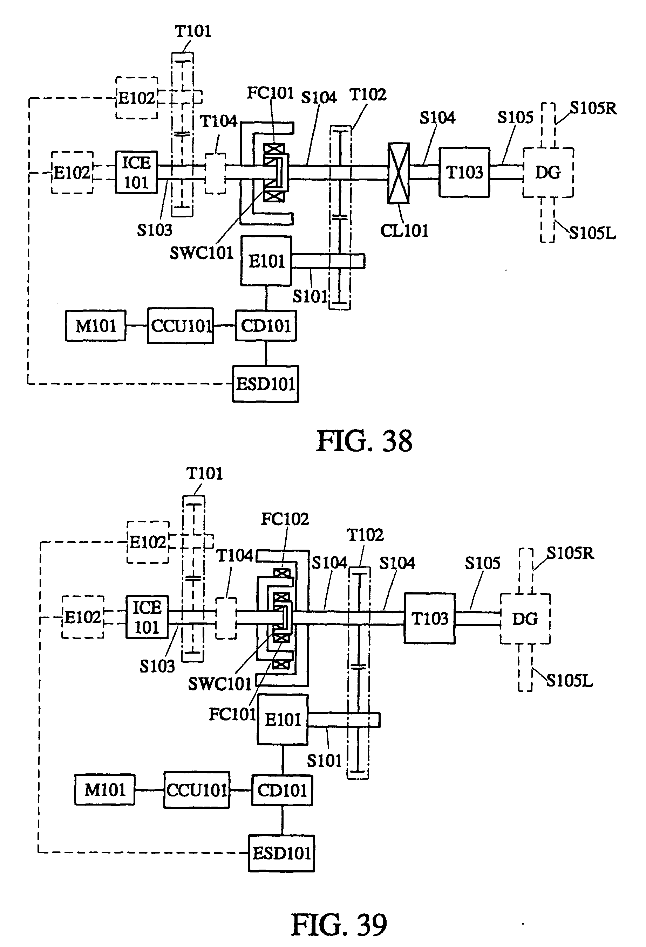

E. Fig. 38 through 45 show that preferred embodiments of the application system are provided in each preferred embodiment with a one-way transmission mechanism SWC101between the shaft S103 incorporated to the engine ICE101 and the driven draw side of the centrifugal clutch FC101, and the output shaft S104 incorporated to the drive draw side of the centrifugal clutch FC101.
   Fig, 38 shows a first preferred embodiment of an application system taken from the preferred embodiment illustrated in Fig. 1, which is changed to that a one-way transmission mechanism is provided between the shaft of the engine incorporated to the driven draw side of the centrifugal clutch and the output shaft incorporated to the drive draw side of the centrifugal clutch. Wherein, the centrifugal clutch FC101 and the one-way transmission mechanism SWC101 selected for operation to control the operation of both shafts S103 and S104 to couple or interrupt transmission is provided between the shaft S103 driven by the engine ICE101 and the load side shaft S104. The shaft S103 driven by the engine ICE101 is coupled to the driven draw side of the centrifugal clutch FC101 while the load side shaft S 104 is coupled to the drive draw side of the centrifugal clutch FC101 so that when the load side shaft S104 reaches its preset rpm, the centrifugal clutch FC101 is forthwith closed, thus to draw the shaft S 103 either directly driven by the engine ICE101 or via the fixed or variable speed ratio or variable transmission or planetary transmission mechanism T104; the load side shaft S104 is provided to drive the load and a fixed or variable speed ratio or variable transmission or planetary transmission mechanism T102 may be provided on the load side shaft S104 to engage mutual transmission with the primary dynamo-electric unit E101 while the other units comprising the system are the same as those provided in the preferred embodiment illustrated in Fig. 1;
   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A I through A3 or other specific operation pattern.
   Fig, 39 shows a second preferred embodiment of an application system taken from the preferred embodiment illustrated in Fig. 2. Wherein a one-way transmission mechanism is provided between the shaft of the engine incorporated to the driven draw side of the centrifugal clutch and the output shaft incorporated to the drive draw side of the centrifugal clutch. The double-acting centrifugal clutches FC101 and FC102 are connected in series and in sequence between the shaft S103 and the load side shaft S104 of the engine ICE101, and on the one-way transmission mechanism SWC101 selected for operation. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the load side shaft S104 drawn to each other is provided with a drive power-locking unit to act outward when the centrifugal force reaches a preset value; the outer side of the intermediate layer and the inner side of the outer layer form the centrifugal clutch FC 102; the intermediate layer being coupled to the shaft S 103 driven by the engine having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the load side shaft S104 so to provide linkage with the load when the engine runs at low rpm or is temporarily cut off. The shaft S103 either directly driven or driven through a fixed speed ratio or variable speed ratio, or variable transmission mechanism or planetary transmission mechanism T104 by the engine is coupled to the driven draw side of the centrifugal clutch FC101 and the load side shaft S104 to the drive draw side of the centrifugal clutch FC101 so to forthwith close the centrifugal clutch FC101 and further to draw the shaft S 103 driven by the engine ICE101 when the load side shaft S104 reaches its preset rpm. Alternatively, a fixed speed ratio or variable speed ratio, or variable transmission mechanism or planetary transmission mechanism T102 is provided on the load side shaft S 104 to engage mutual transmission with the primary dynamo-electric unit while the other units comprising the system are the same as those disclosed in the preferred embodiment illustrated in Fig. 2;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Fig, 40 shows a third preferred embodiment of an application system taken from the preferred embodiment illustrated in Fig. 3. Wherein a one-way transmission mechanism is provided between the shaft of the engine incorporated to the driven draw side of the centrifugal clutch and the output shaft incorporated to the drive draw side of the centrifugal clutch. The fixed speed ratio or variable speed ratio, or variable transmission mechanism or planetary transmission mechanism T102 taken from the preferred embodiment illustrated I Fig. 39 are jointly incorporated to the intermediate shaft S102 with the coupling surface of the inner circumference of the double-acting centrifugal clutch FC101 for power locking and the coupling surface of the outer circumference of the double-acting centrifugal clutch FC102. The double-acting centrifugal clutches are comprised of two units of centrifugal clutches FC101 and FC102 inserted to each other in a three-layer structure, an inner, an intermediate and an out layers. Within, the inner layer and the inner side of the intermediate layer form the centrifugal clutch FC101. The inner layer incorporated to the intermediate shaft S102 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for operation is coupled to the shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the intermediate shaft S104 so to provide linkage with the load when the engine runs at low rpm or is temporarily cut off. The shaft S103 either directly driven or driven through a fixed speed ratio or variable speed ratio, or variable transmission mechanism or planetary transmission mechanism T104 by the engine is coupled to the driven draw side of the centrifugal clutch FC101, and the one-way transmission mechanism SWC101 selected for operation is provided between the shaft S103 and the intermediate shaft S102 while the intermediate shaft S102 is coupled to the drive draw side of the centrifugal clutch FC101 so to forthwith close the centrifugal clutch FC101 and further to draw the shaft S103 driven by the engine ICE101 when the intermediate shaft S 102 reaches its preset rpm;
   - the intermediate shaft S102: is directly outputted to the load, or alternatively, to an output clutch CL301 controlled by manual, mechanical, electromagnetic, hydraulic or centrifugal force before being outputted to the load via the load side shaft S104; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L; the additional output clutch CL301 is provided between the intermediate shaft S102 and the load side shaft S104 with both shafts driven by the power-locking coupling surfaces on the inner and outer circumferences of the double-acting centrifugal clutches FC101 and FC102 while the other units comprising the system are the same as those disclosed in the preferred embodiment illustrated in Fig. 3;

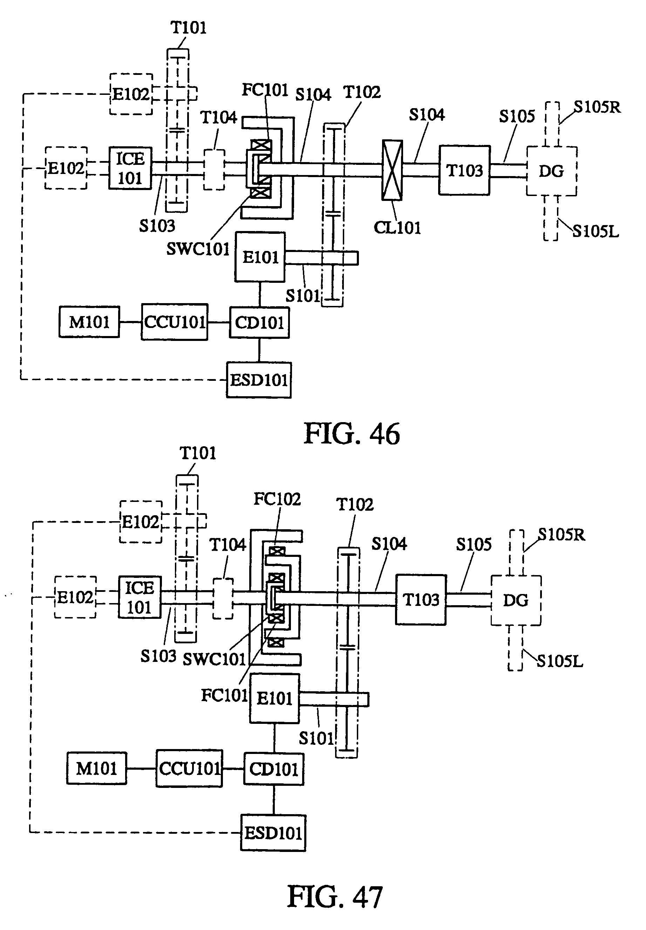

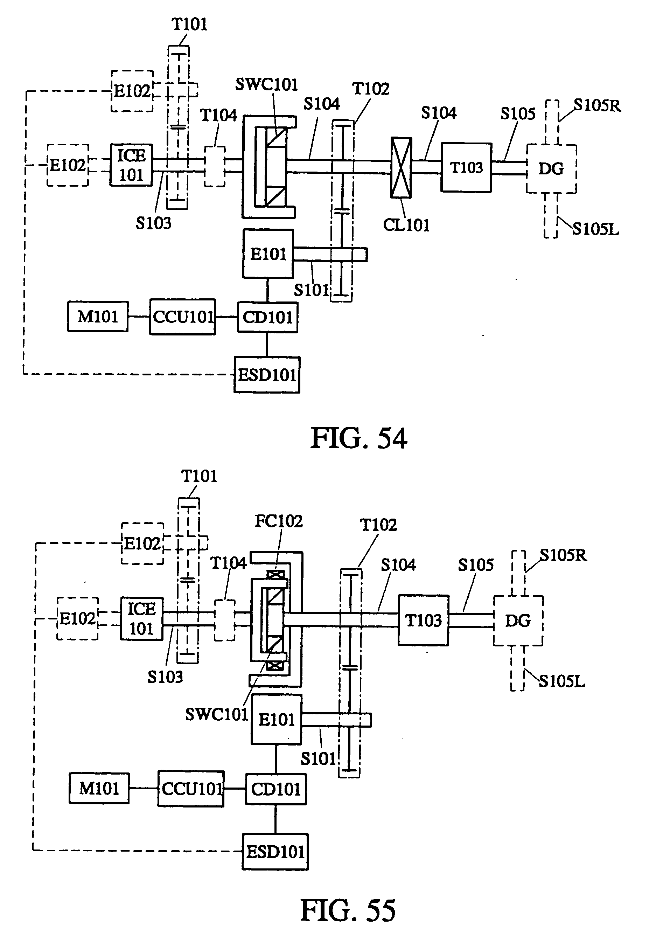

   The combination of those structures described above for the system are subject to control by the manual control interface M101, the central control unit CCU101, the drive control device CD101 and the storage discharging device ESD 101. The specific system structure described above provides same functions same as those by the preferred embodiment illustrated in Fig. 39 when the output clutch CL301 is closed; and when the output clutch CL301 is disengaged, the specific system structure described above provides additional functions related to those described in subparagraphs (1) through (10) or other specific function, it also provides patterns related to those operation patterns described in A1 through A3 or other specific operation pattern.
   Fig, 41 shows a fourth preferred embodiment of an application system taken from the preferred embodiment illustrated in Fig. 4. Wherein a one-way transmission mechanism is provided between the shaft of the engine incorporated to the driven draw side of the centrifugal clutch and the output shaft incorporated to the drive draw side of the centrifugal clutch. The primary dynamo-electric unit E101 and the load side shaft S104 indicate coaxial structure and the double-acting centrifugal clutches FC101 and FC102 are provided between the dynamo-electric unit E101 and the engine ICE 101 with its inner and outer structures to be incorporated to the load side shaft S104 incorporated to the output terminal of the primary dynamo-electric unit E101 and its intermediate structure is incorporated to the shaft S103 driven by the engine ICE101. The double-acting centrifugal clutches is comprised of two units of centrifugal clutches FC101 and FC102 inserted to each other in a three-layer structure, an inner, an intermediate and an out layers. Within, the inner layer and the inner side of the intermediate layer form the centrifugal clutch FC101. The inner layer incorporated to the load side shaft S 104 drawn to each other is provided with a drive power-locking unit to act outward when the centrifugal force reaches a preset value. The outer side of the intermediate layer and the inner side of the outer layer form the centrifugal clutch FC102. The intermediate layer related to the one-way transmission mechanism SWC101 selected for operation is coupled to the shaft S103 driven by the engine. The inner side of the intermediate layer is provided with a circumferential coupling surface for power-locking and its outer side is provided with a drive power-locking unit acting outward when the centrifugal force reaches its preset value performs the functions as an output clutch with the power-locking circumferential coupling surface on the inner side of the outer layer. The outer layer is also incorporated to the load side shaft S104 so to provide linkage with the load when the engine runs at high speed and to cut off the linkage to the load when the engine runs at low speed. The shaft S103 either directly driven or driven through a fixed speed ratio or variable speed ratio, or variable transmission mechanism or planetary transmission mechanism T104 by the engine is coupled to the driven draw side of the centrifugal clutch FC101 and the load side shaft S103 to the driven draw side of the centrifugal clutch FC101. The one-way transmission mechanism SWC101 selected for operation is provided between the shaft S 103 and the load side shaft S104 and the load side shaft S104 is incorporated to the drive draw side of the centrifugal clutch FC101 so that once the load side shaft S 104 reaches its rpm, the centrifugal clutch FC101 is closed thus to draw the shaft S103 driven by the engine ICE101. The output clutch CL101 when required is provided between the output side of the primary dynamo-electric unit E101 and the fixed speed ratio or variable speed ratio, or variable transmission mechanism or planetary transmission mechanism T103. The output clutch CL101 is controlled by manual, mechanical, electromagnetic, hydraulic or centrifugal force while the other units comprising the system are the same as those provided in the preferred embodiment illustrated in Fig. 4;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

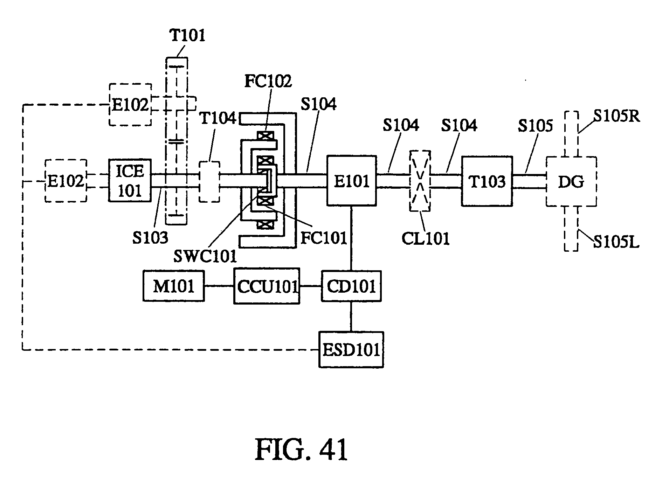

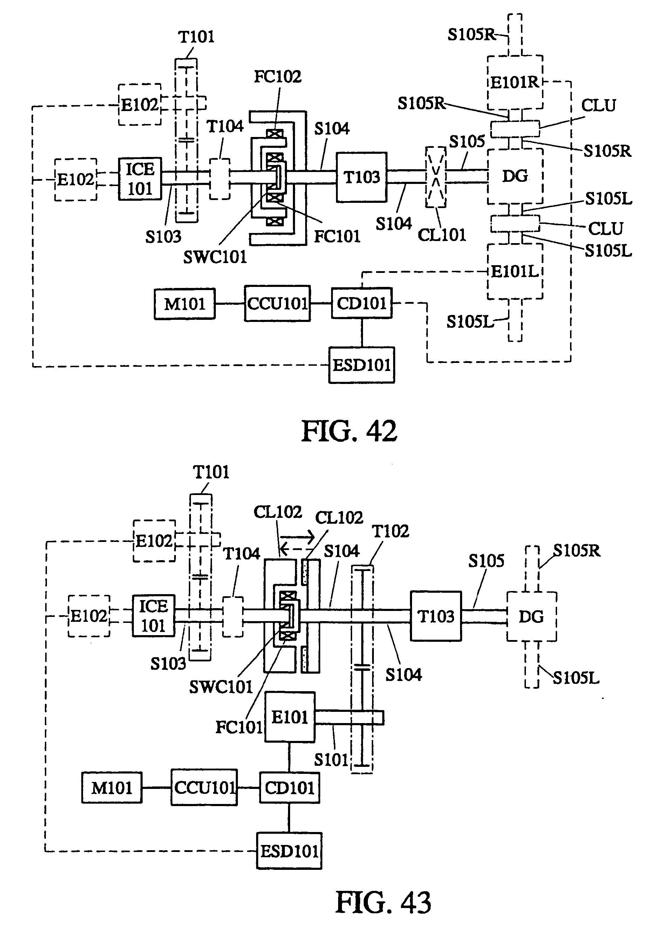

   Fig. 42 is a schematic view showing that the preferred embodiment illustrated in Fig. 41 is further having the primary dynamo-electric unit replaced by two independent dynamo-electric units respectively provided on the side of two output shafts of a differential gear set. Within, the primary dynamo-electric unit E101 of the preferred embodiment in Fig. 41 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S 104 on the load side of the centrifugal clutch FC 101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD101.
   Fig. 43 is a view showing that the preferred embodiment taken from Fig. 38 of the present invention is provided with a controllable clutch. Within, the centrifugal clutch FC101 and another clutch CL102 controlled by manual, mechanical, electromagnetic, hydraulic power-locking type of or hydraulic coupling type are provided between the engine shaft S103 and the load side shaft S104 so to execute power coupling or interruption on both of the engine shaft S103 and the load side shaft S104 for the system to be equipped with a power-locking type or hydraulic coupling type controllable clutch CL102 and engine throttle, to further acquire another specific function for the engine rotation power driven load. The shaft S 103 either directly driven by the engine ICE101, or through a fixed or variable speed ratio or variable transmission or planetary transmission mechanism T104 is coupled to the driven drawn side of the centrifugal clutch FC101 while the load side shaft S104 to the drive draw side of the centrifugal clutch FC101. That is, once the load-side shaft S 104 reaches the preset rpm, the centrifugal clutch FC101 is forthwith closed to draw the shaft S103 driven by the engine ICE 101. The centrifugal clutch FC101 and the controllable clutch CL102 is individually provided or sharing the same structure;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

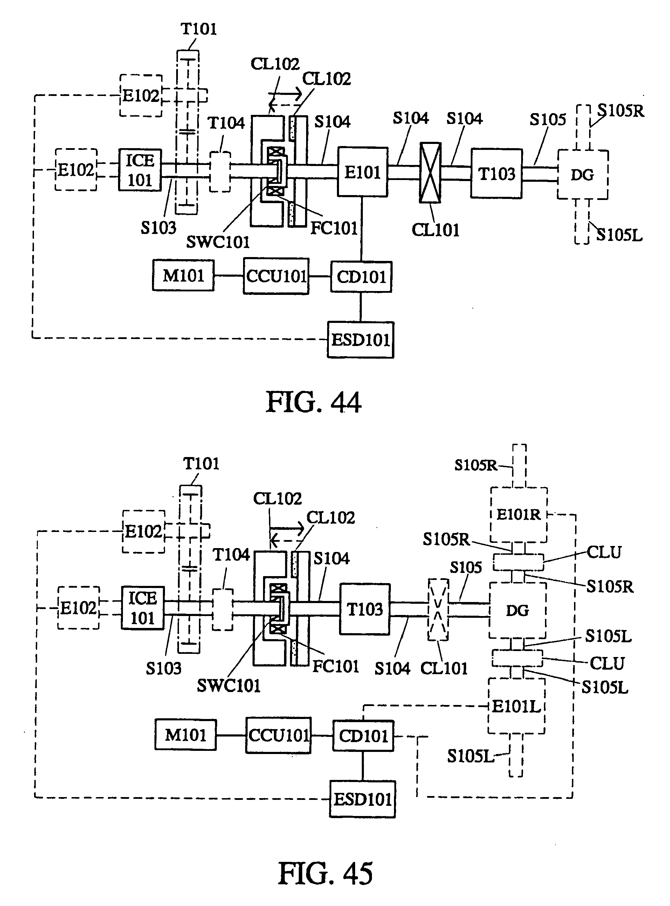

   Fig. 44 is a view showing that the preferred embodiment given in Fig. 43 is provided with an output clutch. Wherein, an output clutch CL101 controlled by manual, mechanical, electromagnetic, and hydraulic or centrifugal force is provided to the preferred embodiment illustrated in Fig. 43. The output clutch CL101 is provided between the load side shaft S104 driven by the primary dynamo-electric unit E101 and the load. When the output clutch CL101 is closed, it provides the same function as those by the preferred embodiment illustrated in Fig. 43; and additional functions when the output clutch CL101 is disengaged, including being separated from the load to leave the engine to simultaneously drive the first and the second dynamo-electric units E101 and E 102 to function as generators, or to drive the primary dynamo-electric E 101 alone to operate as a generator while the primary dynamo-electric unit E101 is provided between the output clutch CL101 and the controllable clutch CL102; as well as those functions related to subparagraphs (1) through (10) or other specific function, and patterns related to those operation patterns described in A1 through A3 or other specific operation pattern.
   Fig. 45 is a schematic view showing that the preferred embodiment illustrated in Fig. 44 is further having the primary dynamo-electric unit replaced by two independent dynamo-electric units respectively provided on the side of two output shafts of a differential gear set. Within, the primary dynamo-electric unit E101 of the preferred embodiment in Fig. 44 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD101 for providing functions same as those described for the preferred embodiment illustrated in Fig. 44.
F. As illustrated in Figs. 46 through 53, those preferred embodiments taken from Figs. 38 through 45 have further to provide various centrifugal clutches and the one-way transmission mechanism SWC101 between the shaft S103 and the load side shaft S104 driven by the engine ICE101 in opposition direction to function as the drive application system:
   Fig. 46 shows that a first preferred embodiment of a drive application system the present invention is comprised of having the centrifugal clutch from the preferred embodiment of Fig. 38 to be provided in opposite direction and a one-way transmission mechanism selected for operation. Wherein, the centrifugal clutch FC101 is provided between the shaft S103 driven by the engine ICE101 and the load side shaft S104 to control the operation of coupling or interruption the transmission by both of the shafts S103 and S104. The shaft S103 driven by the engine ICE101 is coupled to the drive draw side of the centrifugal clutch FC101 and the load side shaft S 104 is coupled to the driven draw side of the centrifugal clutch FC 101. The one-way transmission mechanism SWC 101 is provided between the drive shaft S103 and the load side shaft S104 driven by the engine ICE 101 so that once the shaft S103 which is directly driven by the engine ICE101 or through a fixed speed ratio or variable speed ratio, or variable device or planetary transmission mechanism T104 reaches the preset rpm, it drives to close the centrifugal clutch FC101, thus to draw the load side shaft S104. The shaft S104 on the load side is provided to drive the load, and a fixed speed ratio or variable speed ratio or variable transmission mechanism T102 is provided to the shaft S104 on the load side to engage in mutual transmission with a primary dynamo-electric unit E101 while the other units comprising the system are the same as those provided in the preferred embodiment illustrated in Fig. 38;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.;
   Fig. 47 shows that a second preferred embodiment of a drive application system the present invention is comprised of having the centrifugal clutch from the preferred embodiment of Fig. 39 to be provided in opposite direction and a one-way transmission mechanism selected for operation. Wherein, the double-acting centrifugal clutches FC101 and FC102 are connected in series between the shaft S 103 and the drive load side shaft S104 of the engine ICE101. The double-acting centrifugal clutches FC101 and FC102 form to each other by insertion or are integrated into a 3-layer structure containing an inner layer, an intermediate layer and an outer layer. The inner layer and the inner side of the intermediate layer form the centrifugal clutch FC101, the inner layer incorporated to the shaft S103 on the side of the engine ICE101 drawn to each other is provided with a drive power-locking unit to act outward when the centrifugal force reaches a preset value; the outer side of the intermediate layer and the inner side of the outer layer form the centrifugal clutch FC102; the intermediate layer being coupled to the load side shaft S104 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer; and the outer layer is also incorporated to the shaft S103 on the side of the engine ICE 101 so to provide linkage with the load when the engine runs at low rpm or is temporarily cut off. The load side shaft S 103 either directly driven or driven through a fixed speed ratio or variable speed ratio, or variable transmission mechanism or planetary transmission mechanism T104 by the engine is coupled through the one-way transmission mechanism SWC101 selected for operation to the drive draw side of the centrifugal clutch FC101 and the load side shaft S104 to the driven draw side of the centrifugal clutch FC101 so to forthwith close the centrifugal clutch FC101 and further to draw the load side shaft S 104 when the load side shaft S 104 reaches its preset rpm. Alternatively, a fixed speed ratio or variable speed ratio, or variable transmission mechanism or planetary transmission mechanism T102 is provided on the load side shaft S104 to engage mutual transmission with the primary dynamo-electric unit E101; while the other units comprising the system are the same as those provided in the preferred embodiment illustrated in Fig. 39;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.

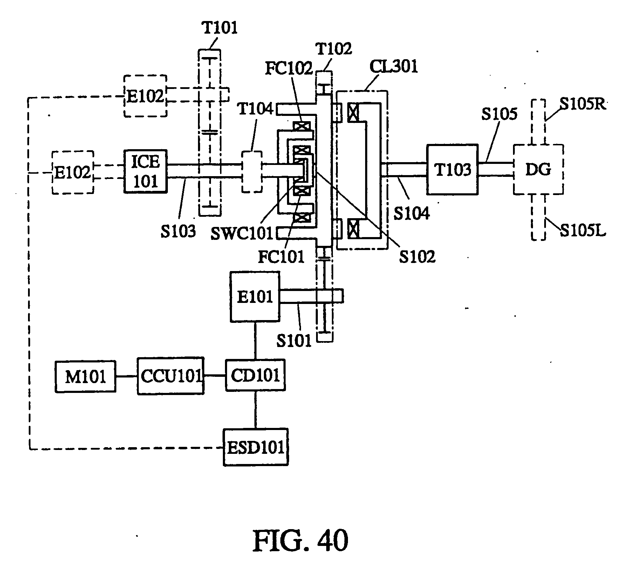

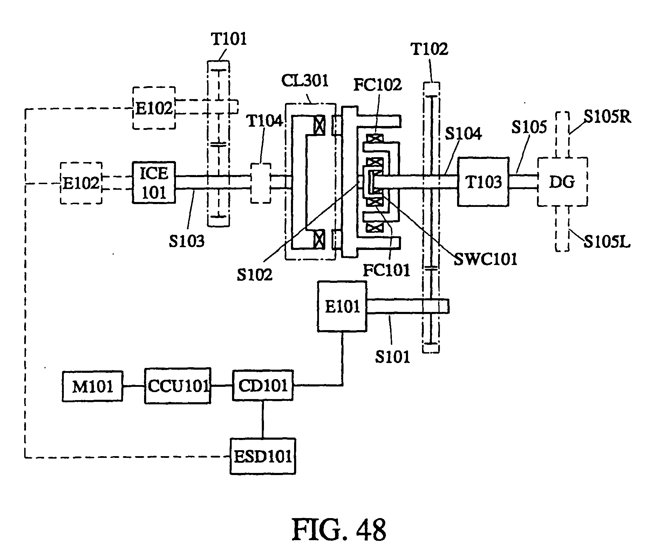

   Fig. 48 shows that a third preferred embodiment of a drive application system the present invention is comprised of having the centrifugal clutch from the preferred embodiment of Fig. 40 to be provided in opposite direction and a one-way transmission mechanism selected for operation. Wherein, an output clutch CL301 controlled by manual, mechanical, electromagnetic or hydraulic force is alternatively provided between the shaft S103 on the side of the engine ICE101 and the double-acting centrifugal clutches at where between the drive draw side of the centrifugal clutch FC101 and the driven draw side of the centrifugal clutch FC102 while the other units comprising the system are the same as those provided in the preferred embodiment illustrated in Fig. 40;
   The combination of those structures described above for the system are subject to control by the manual control interface M101, the central control unit CCU101, the drive control device CD101 and the storage discharging device ESD101. The specific system structure described above provides same functions same as those by the preferred embodiment illustrated in Fig. 47 when the output clutch CL301 is closed; and when the output clutch CL301 is disengaged, the specific system structure described above provides additional functions related to those described in subparagraphs (1) through (10) or other specific function, it also provides patterns related to those operation patterns described in A1 through A3 or other specific operation pattern.

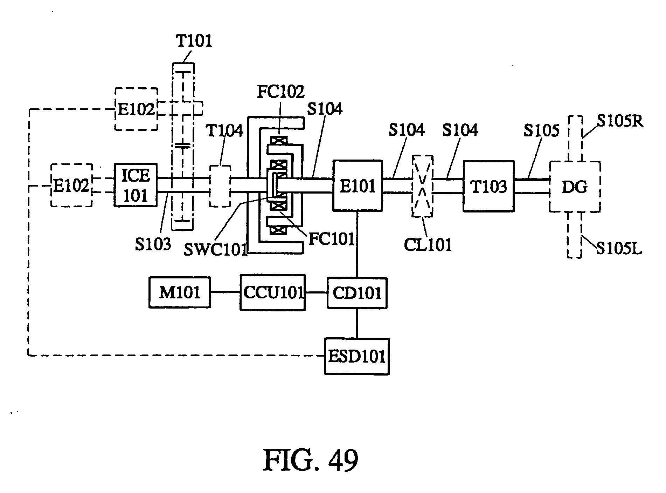

   Fig. 49 shows that a fourth preferred embodiment of a drive application system the present invention is comprised of having the centrifugal clutch from the preferred embodiment of Fig. 41 to be provided in opposite direction and a one-way transmission mechanism selected for operation. Wherein, the dynamo-electric unit E101 and the load side shaft S104 indicate a coaxial structure with the double-acting centrifugal clutches FC101 and FC102 provided between the dynamo-electric unit E101 and the engine ICE101. The intermediate structure is provided to be incorporated to the load side shaft S104 in the same structure of the output shaft of the primary dynamo-electric unit E101, and its inner and outer layers incorporated to the engine shaft S103. The double acting centrifugal clutches FC101 and FC102 form to each other or integrated into a 3-layer structure containing an inner layer, an intermediate layer and an outer layer. Within, the inner layer and the inner side of the intermediate layer form the centrifugal clutch FC101, the inner layer incorporated to the engine shaft S103 drawn to each other is provided with a drive power-locking unit to act outward when the centrifugal force reaches a preset value; the outer side of the intermediate layer and the inner side of the outer layer form the centrifugal clutch FC 102; the intermediate layer being coupled to the shaft S103 driven by the primary dynamo-electric unit E101 having its inner side provided with circumferential coupling surface for power-locking and its outer side provided with a drive power-locking unit acting outward when the centrifugal force reaches its preset value performs the functions as an output clutch with the power-locking circumferential coupling surface on the inner side of the outer layer. The drive draw side of the centrifugal clutch FC101 is incorporated to the shaft S103 on the side of the engine ICE101 so to couple to the engine to drive the load when the engine runs at high rpm, and to cut off the linkage to the load when the engine runs at low rpm. The engine ICE101 is either directly or by means of the shaft S 103 driven by a fixed speed ratio or variable speed ratio, or variable transmission mechanism or planetary transmission mechanism T104, coupled to the drive draw side of the centrifugal clutch FC101 and the driven draw side of the other centrifugal clutch FC102. Meanwhile, the load side shaft S104 is coupled to the driven draw side of the centrifugal clutch FC101 and the drive draw side of the other centrifugal clutch FC102 so that when the load side shaft S104 reaches its preset rpm, the other centrifugal clutch FC102 is closed thus to draw the shaft S103 driven by the engine ICE 101, or when the shaft S103 on the side of the engine ICE101 reaches its preset rpm, the centrifugal clutch FC101 is closed, thus to draw the load side shaft S104 to drive the load; as required, the output clutch CL101 is provided at where between the output side of the primary dynamo-electric unit E101 and the fixed speed, or variable speed ratio or variable transmission mechanism or planetary transmission mechanism T103. The output clutch CL101 is controlled by manual, mechanical, electromagnetic, hydraulic or centrifugal force while the other units comprising the system are the same as those provided in the preferred embodiment illustrated in Fig. 41;
   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.

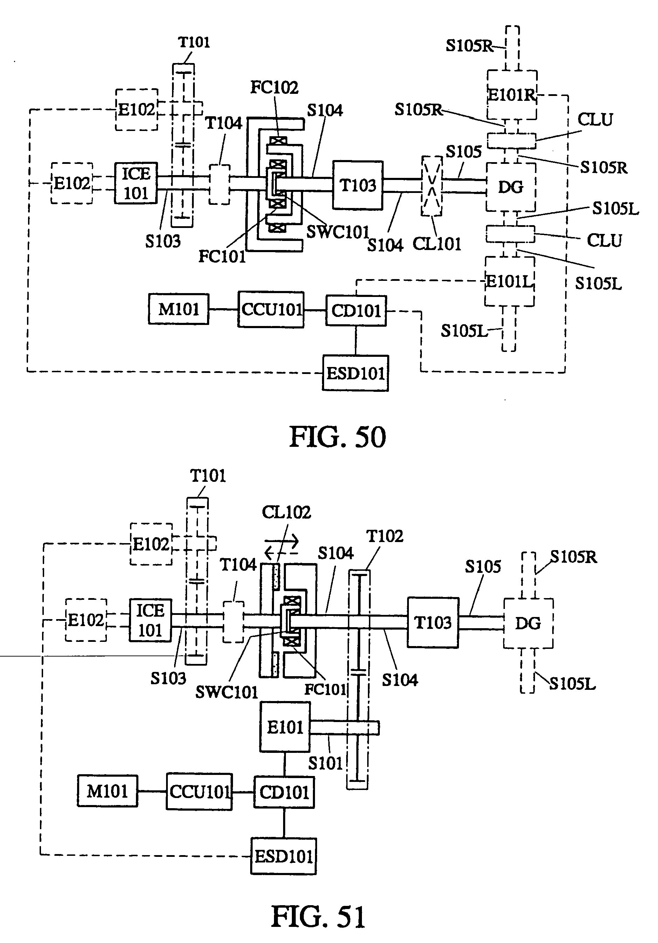

   Fig. 50 is a schematic view showing that the primary dynamo-electric unit in the preferred embodiment taken from Fig. 49 is replaced by two independent dynamo-electric units respectively provided on the side of two output shafts of the differential gear set. Within, the primary dynamo-electric unit E101 of the preferred embodiment in Fig. 49 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S 104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S 105 of the differential gear set DG. Both of the primary dynamo-electric unit E101R to the right and the other primary dynamo-electric unit E101L on the left are subject to equal speed or differential drive by a drive control device CD101.
   Fig. 51 shows that the preferred embodiment of Fig. 46 is provided with a controllable clutch. Wherein, a centrifugal the centrifugal clutch FC101 and another clutch CL102 controlled by manual, mechanical, electromagnetic, hydraulic power-locking type of or hydraulic coupling type are provided between the engine shaft S 103 and the load side shaft S 104 so to execute power coupling or interruption on both of the engine shaft S103 and the load side shaft S104 for the system to be equipped with a power-locking type or hydraulic coupling type controllable clutch CL102 and engine throttle, to further acquire another specific function for the engine rotation power driven load. The shaft S103 either directly driven by the engine ICE101, or through a fixed or variable speed ratio or variable transmission or planetary transmission mechanism T104 is coupled to the drive drawn side of the centrifugal clutch FC101 while the load side shaft S104 to the driven draw side of the centrifugal clutch FC101. That is, once the shaft S103 on the side of the engine ICE101 reaches the preset rpm, the centrifugal clutch FC101 is forthwith closed to draw the load side shaft S104. The centrifugal clutch FC101 and the controllable clutch CL102 is individually provided or sharing the same structure, while the other units comprising the system are the same as those provided in the preferred embodiment illustrated in Fig. 46;
   The combination of those structures described above for the system are subject to control by the manual control interface M101, the central control unit CCU101, the drive control device CD 101 and the storage discharging device ESD101. The specific system structure described above provides functions related to those described in subparagraphs (1) through (10) or other specific function, it also provides patterns related to those operation patterns described in A1 through A3 or other specific operation pattern.

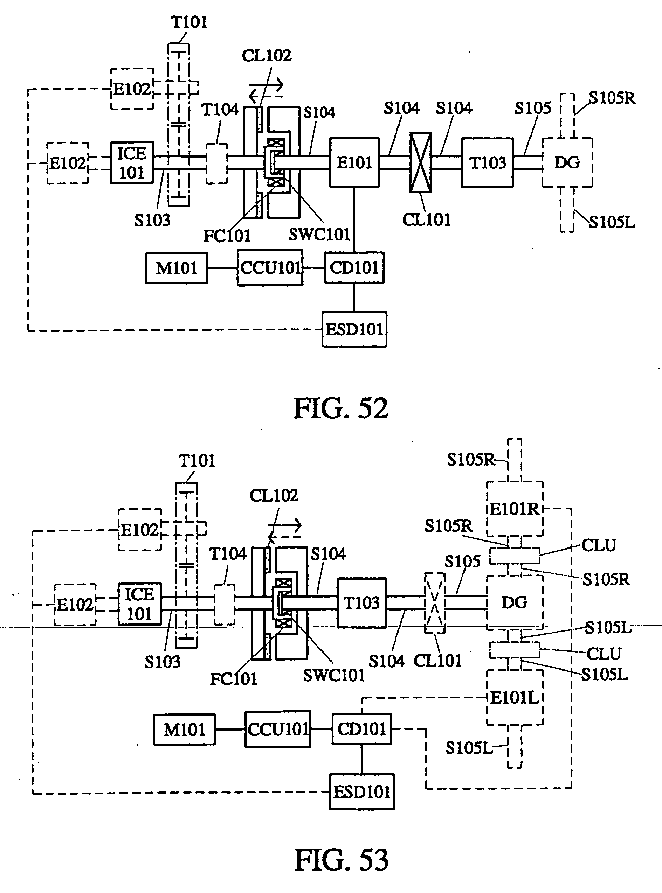

   Fig. 52 shows that the preferred embodiment of Fig. 51 is provided with an output clutch. Wherein, the preferred embodiment taken from Fig. 51 being further provided with an output clutch CL101 controlled by manual, mechanical, electromagnetic, hydraulic or centrifugal force is disposed at where between the load side S104 driven by the primary dynamo-electric unit E101 and the load. When the output shaft CL101 is closed, it provides the same functions as those by the preferred embodiment given in Fig. 51; and when it is disengaged, the engine ICE101 simultaneously drives the primary dynamo-electric unit E101 and the secondary dynamo-electric unit E102 to operate as a generator or the primary dynamo-electric unit E101 is driven alone to operate as a generator and also provides additional functions related to those described in subparagraphs (1) through (10) or other specific function, it also provides patterns related to those operation patterns described in A1 through A3 or other specific operation pattern.
   Fig. 53 is a schematic view showing that the primary dynamo-electric unit in the preferred embodiment taken from Fig. 52 is replaced by two independent dynamo-electric units respectively provided on the side of two output shafts of the differential gear set. Within, the primary dynamo-electric unit E101 of the preferred embodiment in Fig. 52 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The shaft S 104 on the load side of the centrifugal clutch FC101 is directly outputted to the shaft S105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD101, while providing the same functions as those provided in the preferred embodiment illustrated in Fig. 52;
   Fig, 54 shows a first preferred embodiment of an application system that provides a one-way transmission mechanism between the load side shaft and the engine power source. Wherein, the one-way transmission mechanism SWC101 is provided between the shaft S103 and the load side shaft S104 driven by the engine ICE101. When the rpm of the load side shaft S104 is higher than that of the shaft S103 driven directly by the engine ICE 101 or through a fixed speed ratio, variable speed ration or variable transmission mechanism or planetary transmission mechanism T104, the one-way transmission mechanism SWC101 is idling without transmitting the rotation kinetic energy, and the rpm of the shaft S103 driven directly by the engine ICE101 or through a fixed speed ratio, variable speed ration or variable transmission mechanism, or planetary transmission mechanism T104 is higher than that of the load side shaft S104, the rotation kinetic energy from the shaft S103 is transmitted through the one-way transmission mechanism SWC101 to the load side shaft S104. The load side shaft S104 is provided for driving the load and the shaft S103 driven directly by the engine ICE101 or through a fixed speed ratio, variable speed ration or variable transmission mechanism or planetary transmission mechanism T102 is provided on the load side shaft S104 to provide mutual transmission with the primary dynamo-electric unit E101 while the other units comprising the system are the same as those described in the preferred embodiment illustrated in Fig. 1;
   The combination of those structures described above for the system are subject to control by the manual control interface M101, the central control unit CCU101, the drive control device CD101 and the storage discharging device ESD101. The specific system structure described above provides functions related to those described in subparagraphs (1) through (10) or other specific function, it also provides patterns related to those operation patterns described in A1 through A3 or other specific operation pattern.
   Fig, 55 shows a second preferred embodiment of an application system that provides a one-way transmission mechanism between the load side shaft and the engine power source. Wherein, the one-way transmission mechanism SWC101 and the centrifugal clutch FC102 are provided between the shaft S 103 and the load side shaft S 104 driven by the engine ICE 101. The shaft S103 driven directly by the engine ICE101 or through a fixed speed ratio, variable speed ration or variable transmission mechanism or planetary transmission mechanism T 104 is coupled to the drive draw side of the centrifugal clutch FC 102 and the load side shaft S 104 is couple to the driven draw side of the centrifugal clutch FC102 so that when the rpm of the load side shaft S104 is higher than that of the shaft S103 driven by the fixed speed ratio, variable speed ration or variable transmission mechanism or planetary transmission mechanism T104, the one-way transmission mechanism SWC101 is idling without transmitting rotation kinetic energy, and the rpm of the shaft S103 driven directly by the engine ICE101 or through a fixed speed ratio, variable speed ration or variable transmission mechanism, or planetary transmission mechanism T104 is higher than that of the load side shaft S104, the rotation kinetic energy from the shaft S103 is transmitted through the one-way transmission mechanism SWC101 to the load side shaft S104. When the shaft S103 directly driven by engine ICE101 or through the fixed speed ratio, variable speed ration or variable transmission mechanism or planetary transmission mechanism T104 reaches its preset rpm, the centrifugal clutch FC102 is forthwith closed to draw the load side shaft S104. Alternatively, the fixed speed ratio, variable speed ration or variable transmission mechanism or planetary transmission mechanism T102 is provided on the load side shaft S104 to provide mutual transmission with the primary dynamo-electric unit E101 while the other units comprising the system are the same as those described in the preferred embodiment illustrated in Fig. 2;
   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.
   Fig, 56 shows a third preferred embodiment of an application system that provides a one-way transmission mechanism between the load side shaft and the engine power source. Wherein, the fixed speed ratio, variable speed ration or variable transmission mechanism or planetary transmission mechanism T102 given in the preferred embodiment illustrated in Fig. 55 is jointly incorporated to the intermediate shaft S102 with the coupling surface on the outer circumference on the driven draw side of the centrifugal clutch FC 102. Its intermediate layer is provided with a drive power-locking unit acting outward when the centrifugal force reaches its preset value. The intermediate layer is coupled to the shaft S103 driven by the engine ICE101, and the one-way transmission mechanism SWC101 selected for operation is provided in the inner side to be coupled to the intermediate shaft S 102 so to cut off the linkage to the load when the engine stops or runs at low rpm. The shaft S 103 directly driven or through the fixed speed ratio, variable speed ration or variable transmission mechanism or planetary transmission mechanism T104 is incorporated to the drive draw side of the centrifugal clutch FC102 and the intermediate shaft S102 is coupled to the driven draw side of the centrifugal clutch FC102 so that once the rpm of the intermediate shaft S102 is higher than the shaft S103 directly driven or through the fixed speed ratio, variable speed ration or variable transmission mechanism or planetary transmission mechanism T104, the one-way transmission mechanism SWC101 is idling without transmitting rotation kinetic energy, and the rpm of the shaft S103 driven directly by the engine ICE101 or through a fixed speed ratio, variable speed ration or variable transmission mechanism, or planetary transmission mechanism T104 is higher than that of the load side shaft S104, the rotation kinetic energy from the shaft S103 is transmitted through the one-way transmission mechanism SWC101 to the intermediate shaft S102. The intermediate shaft S102 is directly outputted to the load, or alternatively via the load side shaft S104 before being outputted to the load by means of an optional output clutch CL301 controlled by manual, mechanical, electromagnetic, or hydraulic force; or alternatively, via the shaft S105 for single axial output by means of the fixed speed ratio, variable speed ration or variable transmission mechanism or planetary transmission mechanism T102; or alternatively, through two units of differential shafts S105R and S105L for differential output by means of the transmission mechanism comprised of the differential gear set DG. The optional output clutch CL301 may be provided at where between the intermediate shaft S102 drawn by the power-locking coupling surface on the outer circumference of the centrifugal clutch FC 102 and the load side shaft S 104;
   - the intermediate shaft S 102: is directly outputted to the load, or alternatively, to an output clutch CL301 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L; the additional output clutch CL301 is provided between the intermediate shaft S102 and the load side shaft S104 with both shafts driven by the power-locking coupling surfaces on the inner and outer circumferences of the double-acting centrifugal clutches FC101 and FC102 while the other unit comprising the system are the same with those described in the preferred embodiment illustrated in Fig. 3;

   The combination of those structures described above for the system are subject to control by the manual control interface M101, the central control unit CCU101, the drive control device CD101 and the storage discharging device ESD 101. The specific system structure described above provides functions same as those by the preferred embodiment given in Fig. 55 when the output clutch CL301 is closed; and when the output clutch CL301 is disengaged, it provides functions related to those described in subparagraphs (1) through (10) or other specific function, it also provides patterns related to those operation patterns described in A1 through A3 or other specific operation pattern.
   Fig, 57 shows a fourth preferred embodiment of an application system that provides a one-way transmission mechanism between the load side shaft and the engine power source. Wherein, the dynamo-electric unit E101 and the load side shaft S104 indicate a coaxial structure and the centrifugal clutch FC102 is provided between the primary dynamo-electric unit E101 and the engine ICE101. The driven draw side of the centrifugal clutch FC102 is incorporated to the load side shaft S104 coupled to the output shaft of the primary dynamo-electric unit E101 and the drive draw side of the centrifugal clutch FC102 is coupled to the shaft S103 driven by the engine ICE101. The one-way transmission mechanism SWC101 selected for operation is provided between the shaft S 103 and the load side shaft S104. The drive draw side is provided with drive power-locking unit acting outward once the centrifugal force reaches its preset value thus to provide the function of an output clutch jointly with the inner circumference coupling surface for power-locking on the driven draw side. The engine ICE101 is directly incorporated or through the shaft S103 driven by the fixed speed ratio, variable speed ratio or variable transmission mechanism or planetary transmission mechanism T104, to the drive draw side of the centrifugal clutch FC101 while the load side shaft S104 is incorporated to the driven draw side of the centrifugal clutch FC101 so that once the rpm of the shaft S103 driven by the engine Ice 101 is higher than that of the load side shaft S104, rotation kinetic energy from the engine ICE101 drives the load side shaft S 104 by means of the transmission from the one-way transmission mechanism SWC 101, or when the shaft S103 driven by the engine ICE101 reaches its preset rpm, the centrifugal clutch FC102 is closed to couple the engine ICE101 and the load side side S104. As required, the output clutch CL101 is provided between the output side of the primary dynamo-electric unit E101 and the fixed speed ratio, variable speed ratio, variable transmission mechanism or planetary transmission mechanism T103. The output clutch CL101 is controlled by manual, mechanism, electromagnetic, hydraulic or centrifugal force while the other units comprising the system are the same as those described in the preferred embodiment illustrated in Fig. 4;
   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.

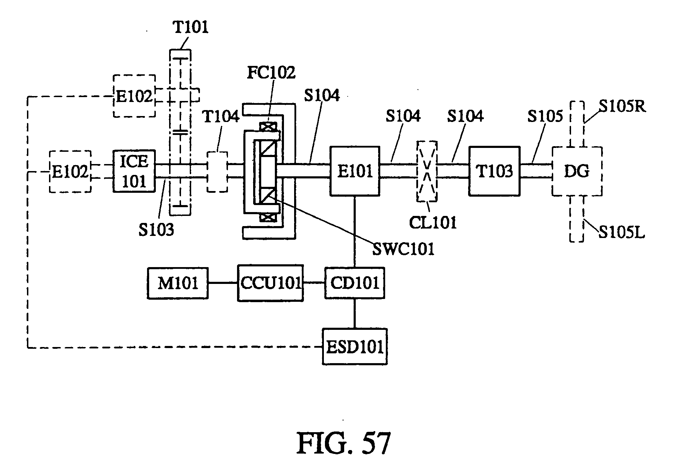

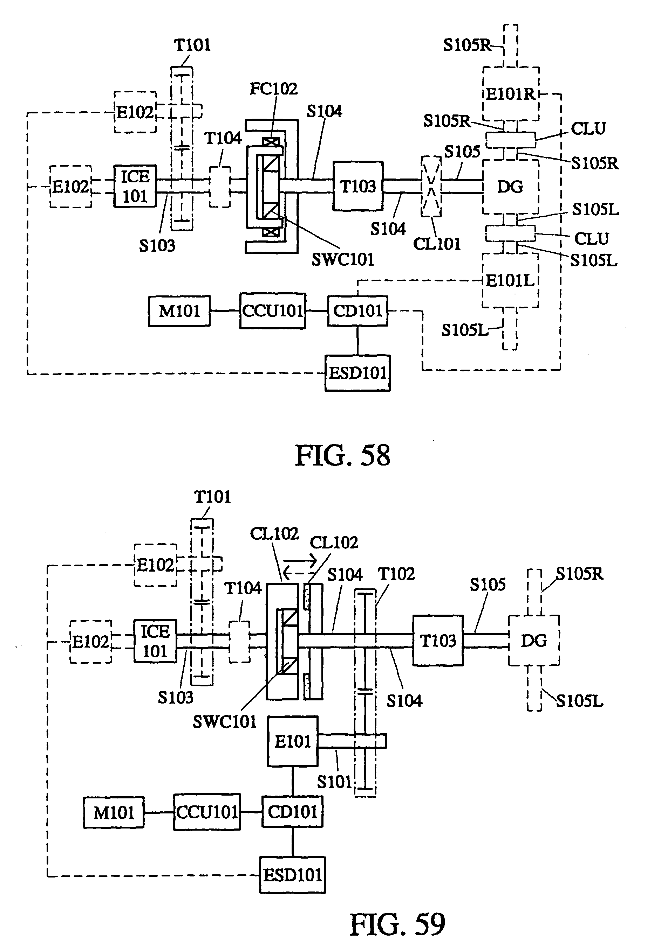

   Fig. 58 is a schematic view showing that the primary dynamo-electric unit in the preferred embodiment taken from Fig. 57 is replaced by two independent dynamo-electric units respectively provided on the side of two output shafts of the differential gear set. Within, the primary dynamo-electric unit E101 of the preferred embodiment in Fig. 57 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The load side shaft S 104 coaxial with the primary dynamo-electric unit E101 driven by the controllable clutch CL102 is directly outputted to the shaft S 105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD 101.
   Fig. 59 shows that the preferred embodiment illustrated in Fig. 54 of the present invention is provided with a controllable clutch. Wherein, the power-locking type or hydraulic coupling type controllable clutch CL102 by manual, mechanical, electromagnetic or hydraulic force, and the one-way transmission mechanism SWC101 selected for operation of the preferred embodiment in Fig. 54 are provided between the engine shaft S 103 and the load side shaft S104 so to execute power coupling or interruption on both of the engine shaft S103 and the load side shaft S104. In turn, the system is provided with power-locking or hydraulic coupling type controllable clutch CL102 and the engine throttle to obtain another specific function of the load driven by the rotation power from the engine so that when the rpm of the load side shaft S104 is higher than that of the shaft S103 driven by the engine ICE101 and the one-way transmission mechanism SWC101 is idling, or the rpm of the shaft S103 is higher than that of the load side shaft S104, the engine ICE101 drives the output shaft S104 while the other units comprising the system are the same as those described in the preferred embodiment illustrated in Fig. 54 ;
   The combination of those structures described above for the system are subject to control by the manual control interface M101, the central control unit CCU101, the drive control device CD101 and the storage discharging device ESD 101. The specific system structure described above provides functions related to those described in subparagraphs (1) through (10) or other specific function, it also provides patterns related to those operation patterns described in A1 through A3 or other specific operation pattern.

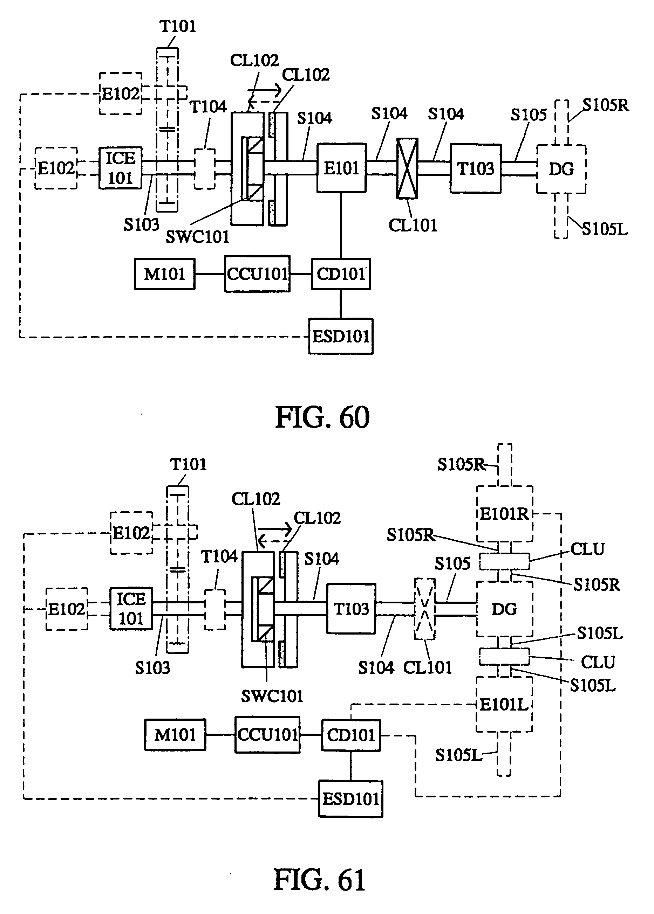

   Fig. 60 shows that the preferred embodiment taken from Fig. 59 of the present invention is provided with an output clutch CL101 controlled by manual, mechanical, electromagnetic, hydraulic or centrifugal force. The output clutch CL101 is provided between the load side shaft S104 driven by the primary dynamo-electric unit E101 and the load. When the output clutch CL101 is closed, it provides same functions as those by the preferred embodiment in Fig. 59. When the output clutch CL101 is disengaged, it provides additional functions including that it is separated from the load and leaves the engine ICE101 to simultaneously drive both of the primary dynamo-electric unit and the secondary dynamo-electric unit E102 to operate as a generator, or the primary dynamo-electric unit E101 is driven alone to operate as a generator, and functions related to those described in subparagraphs (1) through (10) or other specific function, it also provides patterns related to those operation patterns described in A1 through A3 or other specific operation pattern.
   Fig. 61 is a schematic view showing that the primary dynamo-electric unit in the preferred embodiment taken from Fig. 60 is replaced by two independent dynamo-electric units respectively provided on the side of two output shafts of the differential gear set. Within, the primary dynamo-electric unit E101 of the preferred embodiment in Fig. 60 is replaced by a primary dynamo-electric unit E101R to the right and another primary dynamo-electric unit E101L on the left. The primary dynamo-electric unit E101R to the right is directly connected in series with the shaft S105R to the right of the differential gear set DG, or alternatively, a one-way or two-way alternatively adapted with a one-way or two-way clutch CLU before being connected in series to the shaft S105R to the right of the differential gear set DG. The other primary dynamo-electric unit E101L on the left is directly connected in series with a shaft S105L to the left of a differential gear set DG or alternatively adapted with a one-way or two-way clutch CLU before being connected in series to the shaft S105L to the left of the differential gear set DG. The load side shaft S 104 coaxial with the primary dynamo-electric unit E101 driven by the controllable clutch CL102 is directly outputted to the shaft S 105 of the differential gear set DG, or through the fixed or variable speed ratio or variable transmission or planetary transmission mechanism T103 before being outputted to the shaft S105 of the differential gear set DG, or alternatively, by means of the output clutch CL101 controlled by manual, mechanical, electromagnetic, hydraulic or centrifugal force before being outputted to the shaft S105 of the differential gear set DG. Both of the primary dynamo-electric unit E101R to the right and the other primary dynamo-electric unit E101L on the left are subject to equal speed or differential drive by a drive control device CD101 having the same functions as those provided by the preferred embodiment in Fig. 60.
   In the system, for those preferred embodiments illustrated in Figs. 1∼8, 22-37 and 39∼61, the load is driven by the output directly from the shaft S103 or via the variable or planetary transmission mechanism T104 with fixed or variable speed ratio; and the originally disclosed load side shaft S104 is provided to directly coupled or through the variable or planetary transmission mechanism T102 with fixed or variable speed ratio, to the primary dynamo-electric unit E101. Meanwhile, the output clutch CL101 driven by the load side shaft S104, the variable or planetary transmission mechanism T103 with fixed or variable speed ratio, and the load side device of the differential gear set DG can be all or partially reserved or removed.
   Furthermore, each of those preferred embodiments illustrated in Figs. 1∼61, the load is driven by the output directly from the shaft S103 or via the variable or planetary transmission mechanism T104 with fixed or variable speed ratio and the primary dynamo-electric unit E101 driven by the engine ICE101 operates as a generator; or the electric energy generated by the secondary dynamo-electric unit E102 driven directly by the electric energy from the storage discharging ESD101 or from the engine or via the load is driven by the output directly from the shaft S 103 or via the variable or planetary transmission mechanism T101 with fixed or variable speed ratio is controlled by the manual control interface M101, the central control unit CCU101, the drive control device CD101 for the primary dynamo-electric unit E101 to operate as a motor, thus to start the engine ICE101, or drive only the load with or without the engine ICE101.
   As disclosed above, the prevention of drive motor speed controlled compound power system and its devices characterized by that through the control of the operation of the engine ICE101 and the operation of both of the primary and the secondary dynamo-electric units E101 and E102 to function as a motor or a generator in conjunction with the primary centrifugal clutch FC101 or the secondary centrifugal clutch FC102, the one-way transmission mechanism SWC101 and other optional peripherals to be subject to the control by the manual control interface M101, the central control unit CCU101, and the drive control device CD101 to create diversified operational functions is innovative and practical.

## Claims

1. A speed-controlled dynamo-electric compound system comprising:
an engine (ICE101) having an output shaft (S103);
a primary dynamo-electric unit (E101) arranged to rotate a load side shaft (S104) directly or through a transmission mechanism (T102);
a centrifugal clutch (FC101) having a first side connected to the load side shaft (S104) and a second side connected to the output shaft (S103) of the engine;
a power generation unit (E102) driven by the engine;
a manual control interface (M101) for controlling the system via a central controller (CCU101);
a storage device (ESD101) for charging by the power generation unit to output electric energy to drive the dynamo-electric unit (E101) at a preset speed causes the first side of the centrifugal clutch (FC101) to engage the second side and thereby connect the engine to the load side shaft (S104);
**characterized in that** the power generation unit (E102) continues to be driven while the engine is running
a load is connected to the load side shaft (S104) through an output device (T103); and
the arrangement is such that, when the centrifugal clutch (FC101) is engaged, the engine (ICE101) drives the load side shaft (S104); and, when the centrifugal clutch (FC101) is disengaged, the system has the following modes: 1) the engine (ICE101) drives the dynamo-electric unit (E101) via the power generation unit (E102) to supply power; 2) the engine (ICE101) drives the power generation unit (E102) to charge the storage device (ESD101); and 3) both 1) and 2).

2. A system as claimed in claim 1, further comprising a second centrifugal clutch (FC102) arranged to engage the load when the speed of the engine (ICE101) is above a preset value, and to disengage the load when the speed of the engine is below the preset value.

3. A system according to any one of the preceding claims, comprising a load side shaft S104: is directly outputted to the load, or alternatively, to an output clutch CL101 controlled by manual, mechanical, electromagnetic, hydraulic or centrifugal force before being outputted to the load; or as required, to execute single shaft output through a fixed speed ratio or variable speed ratio, variable transmission or planetary transmission mechanism T103, then through a shaft S105; or an optional transmission mechanism comprised of a differential gear set DG for differential output through two units of differential shafts S105R and S105L.

4. A system according to any one of the preceding claims, comprising a fixed or variable speed ratio or variable transmission or planetary transmission mechanism T104: an optional mechanism comprised of various known coaxial or non-coaxial transmission, e.g. a fixed ratio speed or stage or stageless variable transmission mechanism comprised of a gear set, belt gear set or sprocket gear set or power-locking gear set.

5. A system according to any one of the preceding claims, wherein the primary dynamo-electric unit E101 is coupled to the load side shaft S104 and to the drive draw side of the centrifugal clutch FC101 by means of a fixed or variable speed ratio or variable transmission or planetary transmission mechanism T102.

6. A system according to any one of the preceding claims, wherein the secondary dynamo-electric unit E102 is coupled to the shaft S103 driven by the engine ICE101 and the driven draw side of the centrifugal clutch FC102 by means of a fixed or variable speed ratio or variable transmission or planetary transmission mechanism T101.

7. A system according to any one of claims 2 to 6, wherein the secondary dynamo-electric unit E102 is coupled to the shaft S103 driven by the engine ICE101 and the driven draw side of the centrifugal clutch FC102 by means of a fixed or variable speed ratio or variable transmission or planetary transmission mechanism T101, or the secondary dynamo-electric unit E102 is directly coupled to the shaft S103 of the engine.

## Patentansprüche

1. Dynamoelektrische Kombinationsanlage mit Geschwindigkeitssteuerung, umfassend:
einen eine Ausgangswelle (S103) aufweisenden Motor;
eine primäre dynamoelektrische Einheit (E101), die derart angeordnet ist, dass sie eine lastseitige Welle (S104) unmittelbar oder mittels eines Getriebemechanismus (T102) dreht;
eine zentrifugale Kupplung (FC101), die eine erste Seite aufweist, die mit der lastseitigen Welle (S104) verbunden ist, und eine zweite Seite aufweist, die mit der Ausgangswelle (S103) des Motors verbunden ist;
einen vom Motor angetriebenen Stromerzeuger (E102), eine manuelle Steuerungsschnittstelle (M101) zur Steuerung der Anlage über ein zentrales Steuerelement (CCU101);
eine Speichervorrichtung (ESD101) zur Ladung durch den Stromerzeuger, um elektrische Energie zum Antrieb der dynamoelektrischen Einheit (E101) bei einer vorbestimmten Geschwindigkeit, die veranlasst, dass die erste Seite der zentrifugalen Kupplung (FC101) sich mit der zweiten Seite verzahnt, wodurch der Motor mit der lastseitigen Welle (S104) verbunden wird;
**dadurch gekennzeichnet, dass** der Stromerzeuger (E102) bei laufendem Motor weiterhin angetrieben wird, wobei eine Last mit der lastseitigen Welle (S104) über ein Ausgangsgerät (T103) verbunden ist; und
die Anordnung derart ist, dass bei verzahnter zentrifugaler Kupplung (FC101) der Motor (ICE101) die lastseitige Welle (S104) antreibt; und bei nicht verzahnter zentrifugaler Kupplung die Anlage auf die nachfolgenden Weisen betrieben werden kann: 1) der Motor (ICE101) treibt die dynamoelektrische Einheit (E101) über den Stromerzeuger (E102) an, um diese mit Strom zu versorgen; 2) der Motor (ICE101) treibt den Stromerzeuger (E102) zur Ladung der Speichervorrichtung (ESD101) an; und 3) sowohl 1) als auch 2).

2. Anlage nach Anspruch 1, ferner umfassend eine zweite zentrifugale Kupplung (FC102), die derart angeordnet ist, dass sie mit der Last in Wechselwirkung tritt, wenn die Geschwindigkeit des Motors (ICE101) einen vorbestimmten Wert übersteigt und wieder außer Wechselwirkung tritt, wenn die Geschwindigkeit des Motors den vorbestimmten Wert unterschreitet.

3. Anlage nach einem der vorstehenden Ansprüche, umfassend eine lastseitige Welle S104, die unmittelbar an die Last oder alternativ an eine manuell, mechanisch, elektromagnetisch, hydraulisch oder zentrifugal gesteuerte Ausgangskupplung CL101 ausgegeben wird, bevor sie an die Last ausgegeben wird; oder nach Bedarf einen Ausgang an eine einzige Welle mittels eines festen oder variablen Geschwindigkeitsverhältnisses, eines variablen oder Planetengetriebemechanismus T103 und dann durch eine Welle S105 oder einen aus einem Differenzialgetriebe DG zur differenziellen Ausgabe über zwei Differenzialwelleneinheiten S105R und S105L bestehenden optionalen Getriebemechanismus ausführt.

4. Anlage nach einem der vorstehenden Ansprüche, umfassend ein Getriebe mit festem oder variablem Geschwindigkeitsverhältnis oder einen Planetengetriebemechanismus T104; einen aus verschiedenen bekannten koaxialen oder nicht koaxialen Getrieben bestehenden optionalen Mechanismus, z.B. ein Getriebemechanismus mit festem Geschwindigkeitsverhältnis oder einen abgestuften oder stufenlosen variablen Getriebemechanismus, der aus einem Getriebe, einem Riemengetriebe, einem Kettenradgetriebe oder einem Zentralverriegelungsgetriebe besteht.

5. Anlage nach einem der vorstehenden Ansprüche, wobei die primäre dynamoelektrische Einheit E101 mit der lastseitigen Welle S104 und der antreibenden Zugseite der zentrifugalen Kupplung FC101 mittels eines Getriebemechanismus mit festem oder variablem Geschwindigkeitsverhältnis, eines variablen Getriebemechanismus oder eines Planetengetriebemechanismus T102 verbunden ist.

6. Anlage nach einem der vorstehenden Ansprüche, wobei die sekundäre dynamoelektrische Einheit E102 mit der vom Motor ICE101 und der angetriebenen Zugseite der zentrifugalen Kupplung FC102 mittels eines Getriebemechanismus mit festem oder variablem Geschwindigkeitsverhältnis, eines variablen Getriebemechanismus oder eines Planetengetriebemechanismus T101 gekoppelt ist.

7. Anlage nach einem der Ansprüche 2 bis 6, wobei die sekundäre dynamoelektrische Einheit E102 mit der vom Motor ICE101 angetriebenen Welle S103 und der angetriebenen Zugseite der zentrifugalen Kupplung FC102 mittels eines Getriebemechanismus mit festem oder variablem Geschwindigkeitsverhältnis, eines variablen Getriebemechanismus oder eines Planetengetriebemechanismus T101 gekoppelt ist, oder die sekundäre dynamoelektrische Einheit E102 unmittelbar mit der Welle S103 des Motors gekoppelt ist.

## Revendications

1. Système d'unité dynamo-électrique commandée en vitesse comprenant :
un moteur (ICE101) ayant un arbre de sortie (S103) ;
une unité dynamo-électrique primaire (E101) agencée pour faire tourner un arbre côté charge (S104) directement ou par l'intermédiaire d'un mécanisme de transmission (T102) ;
un embrayage centrifuge (FC101) ayant un premier côté relié à l'arbre côté charge (S104) et un second côté relié à l'arbre de sortie (S103) du moteur ;
une unité de production d'électricité (E102) entraînée par le moteur ;
une interface de commande manuelle (M101) destinée à commander le système par l'intermédiaire d'une unité centrale de commande (CCU101) ;
un dispositif de stockage (ESD101) destiné à être chargé par l'unité de production d'électricité pour délivrer en sortie de l'énergie électrique pour entraîner l'unité dynamo-électrique (E101) à une vitesse prédéfinie, amenant le premier côté de l'embrayage centrifuge (FC101) à venir en prise avec le second côté et à relier ainsi le moteur à l'arbre côté charge (S104) ;
**caractérisé par le fait que** l'unité de production d'électricité (E102) continue d'être entraînée lorsque le moteur tourne ;
une charge est reliée à l'arbre côté charge (S104) par l'intermédiaire d'un dispositif de sortie (T103) ; et
l'agencement est tel que, lorsque l'embrayage centrifuge (FC101) est mis en prise, le moteur (ICE101) entraîne l'arbre côté charge (S104) ; et, lorsque l'embrayage centrifuge (FC101) est désengagé, le système comprend les modes suivants : 1) le moteur (ICE101) entraîne l'unité dynamo-électrique (E101) par l'intermédiaire de l'unité de production d'électricité (E102) pour fournir de l'électricité ; 2) le moteur (ICE101) entraîne l'unité de production d'électricité (E102) pour charger le dispositif de stockage (ESD101) ; et 3) à la fois 1) et 2).

2. Système selon la revendication 1, comprenant en outre un second embrayage centrifuge (FC102) agencé pour venir en prise avec la charge lorsque la vitesse du moteur (ICE101) est au-dessus d'une valeur prédéfinie, et pour se désengager de la charge lorsque la vitesse du moteur est au-dessous de la valeur prédéfinie.

3. Système selon l'une quelconque des revendications précédentes, comprenant un arbre côté charge S104 qui est fourni directement à la charge, ou, en variante, à un embrayage de sortie CL101 commandé par une force manuelle, mécanique, électromagnétique, hydraulique ou centrifuge avant d'être fourni à la charge ; ou si nécessaire, pour exécuter une sortie d'arbre unique par un mécanisme de transmission T103 à rapport de vitesse fixe ou à rapport de vitesse variable ou à variation de vitesse ou à engrenages planétaires, puis par un arbre S105 ; ou un mécanisme de transmission facultatif composé d'un train d'engrenages différentiels DG pour une sortie différentielle à travers deux unités d'arbres différentiels S105R et S105L.

4. Système selon l'une quelconque des revendications précédentes, comprenant un mécanisme de transmission T104 à rapport de vitesse fixe ou à rapport de vitesse variable ou à variation de vitesse ou à engrenages planétaires ; un mécanisme facultatif composé de diverses transmissions coaxiales ou non coaxiales connues, par exemple un mécanisme de transmission à rapport de vitesse fixe ou à étage ou à variation de vitesse sans étage, constitué d'un train d'engrenages, d'un train d'engrenages et courroie ou d'un train d'engrenages et pignon ou d'un train d'engrenages à verrouillage électrique.

5. Système selon l'une quelconque des revendications précédentes, dans lequel l'unité dynamo-électrique primaire E101 est couplée à l'arbre côté charge S104 et au côté traction d'entraînement de l'embrayage centrifuge FC101 au moyen d'un mécanisme de transmission T102 à rapport de vitesse fixe ou à rapport de vitesse variable ou à variation de vitesse ou à engrenages planétaires.

6. Système selon l'une quelconque des revendications précédentes, dans lequel l'unité dynamo-électrique secondaire E102 est couplée à l'arbre S103 entraîné par le moteur ICE101 et le côté traction entraîné de l'embrayage centrifuge FC102 au moyen d'un mécanisme de transmission T101 à rapport de vitesse fixe ou à rapport de vitesse variable ou à variation de vitesse ou à engrenages planétaires.

7. Système selon l'une quelconque des revendications 2 à 6, dans lequel l'unité dynamo-électrique secondaire E102 est couplée à l'arbre S103 entraîné par le moteur ICE101 et le côté traction entraîné de l'embrayage centrifuge FC102 au moyen d'un mécanisme de transmission T101 à rapport de vitesse fixe ou à rapport de vitesse variable ou à variation de vitesse ou à engrenages planétaires, ou l'unité dynamo-électrique secondaire E102 est directement couplée à l'arbre S103 du moteur.
